# EUROPEAN PATENT APPLICATION

(11) **EP 2 077 666 A1**
(43) Date of publication of application: **08.07.2009**
(21) Application number: 07807686.6
(22) Date of filing: 21.09.2007
(51) Int. Cl.: H04N 7/173, G06F 13/00, G06F 21/00

(54) **CONTENT DELIVERY SERVER, CONTENT PROVIDING SERVER, CONTENT DELIVERY SYSTEM, CONTENT DELIVERY METHOD, CONTENT PROVIDING METHOD, TERMINAL DEVICE, CONTROL PROGRAM AND COMPUTER READABLE RECORDING MEDIUM**

(30) Priority: 25.10.2006 JP 2006290457
(71) Applicant: Sharp Kabushiki Kaisha, Osaka-shi, Osaka 545-8522 (JP)
(72) Inventor: SUZUKI, Yoshihiro, Osaka-shi (JP)
(74) Representative: Treeby, Philip David William
(86) International application number: PCT/JP2007/068336
(87) International publication number: WO 2008/050560

(57) **Abstract**

A foreign gateway (FGW) (105) of the present invention obtains, via a terminal device (107), authentication information which proves access authority with respect to a home gateway (HGW) (104). In a case where a player (106) plays back content stored in a media server (103), the FGW (105) is allowed to access the HGW (104) by presenting the authentication information to the HGW (104). If, after the content is viewed and listened to by a user, a certain condition is satisfied (a communication is interrupted between the FGW (105) and the mobile terminal (107), for example), the FGW (105) requests the HGW (104) not to permit access from the FGW (105), and the HGW (104) stops permitting the access from the FGW (105). This makes it possible to realize a gateway device which prevents unintended access from outside by nullifying, at appropriate timing, the access authority of a device outside a network to which the gateway device belongs.

## Description

### Technical Field

The present invention relates to a content delivery server, a content providing server, a content delivery system, a content delivery method, a content providing method, a terminal device, a control program, and a computer-readable storage medium, each of which delivers content managed by the content providing server to a content playback device managed by the content delivery server.

### Background Art

A basic object of a home network technology is to allow a user to view TV programs recorded on a home HDD recorder, or digital pictures stored in a PC (Personal Computer) on any TV in a user's home. A keyword, "Location Free", is often used to explain the object. Further, a DLNA (Digital Living Network Alliance) standard, or the like, has been developed, and various companies have been selling DLNA-compliant terminals.

In the DLNA, a user uses a player called "DMP (Digital Media Player)" to designate and play desired content from among content, such as moving images, still images, and sounds, stored in a media server called "DMS (Digital Media Server)". Examples of the DMP encompass a TV, a PC, audio equipment, and the like.

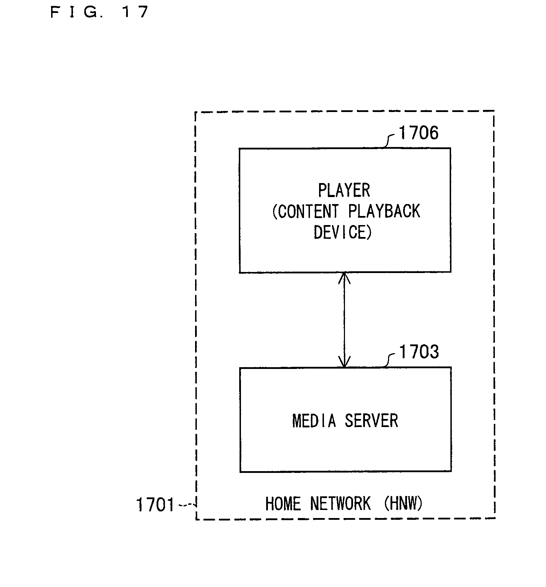

Fig. 17 is a network block diagram illustrating a home network employing the DLNA.

As illustrated in Fig. 17, a home network (hereinafter, referred to as "HNW") 1701 includes a media server (hereinafter, referred to as "DMS") 1703, and a player (hereinafter, referred to as "DMP") 1706. Fig. 17 illustrates one DMP 1706 and one DMS 1703, however, the HNW 1701 may include a plurality of the DMPs 1706 and a plurality of the DMSs 1703.

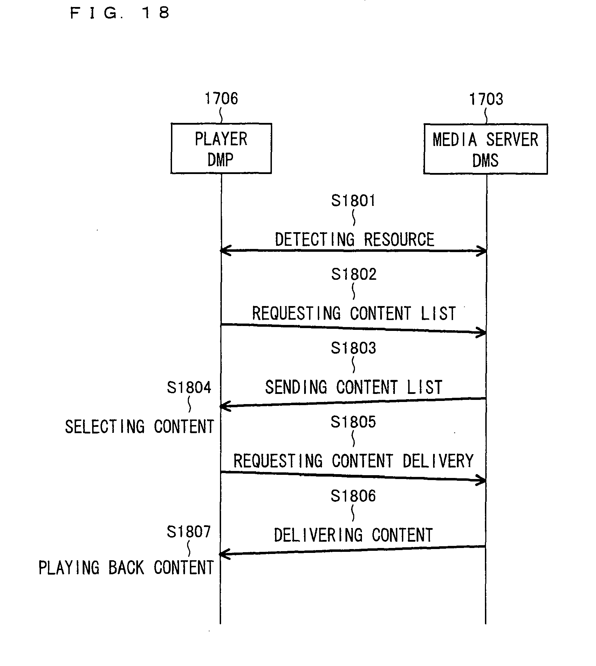

Fig. 18 is a sequence diagram illustrating a conventional procedure for playing back content, based on the DLNA.

The DMP 1706 and the DMS 1703 are connected to each other via a home network, and discover each other in accordance with an UPnP protocol (S1801). The DMS 1703 thus discovered can be checked on a display of the DMP 1706. If a user selects and uses the DMS 1703, the DMP 1706 requests a content list, which is managed by the DMS 1703, from the DMS 1703 (S1802). When the DMP 1706 receives the content list from the DMS 1703 (S1803), a list of all the content stored in the DMS is displayed on the display of the DMP1706. On the list, the content is usually categorized into folders by a sort of a medium, and displayed. A user selects target content to view and listen to the content on the DMP 1706 (S1804), and the DMP 1706 requests the DMS 1703 to deliver the selected content to the DMP 1706 (S1805). After receiving the content from the DMS 1703 (S1806), the DMP 1706 plays back the content on the DMP 1706 (S1807). In a case of large content, such as a moving image, the user usually plays back the content while receiving the content from the DMS 1703 (streaming).

With the use of the DLNA, it becomes possible to view and listen to the content stored in any of the DMSs provided in a user's home on any of the DMPs provided in the user's home.

However, the DLNA is a standard only for a home network constituted inside home, so that in a second place, a user cannot view and listen to the content stored in the DMS in a user's home, for example. A user can use the DLNA without any change in its arrangement if the user sets a comprehensive home network including the user's home and the second place. However, it is not realistic to keep such a network into operation all the time. Even if the network is set only when it is needed, it is necessary to have means for selecting and securely connecting the two networks.

Techniques disclosed in Patent Literatures 1 and 2 have been publicly known as a technique for viewing and listening to, outside a user's home, the content that can be viewed and listened to by a user in the user's home.

Patent Literature 1 discloses a content delivery system which makes it possible for a user to view and listen to, on a mobile terminal, in a place away from the user's home, the content stored in a home server in the user's home.

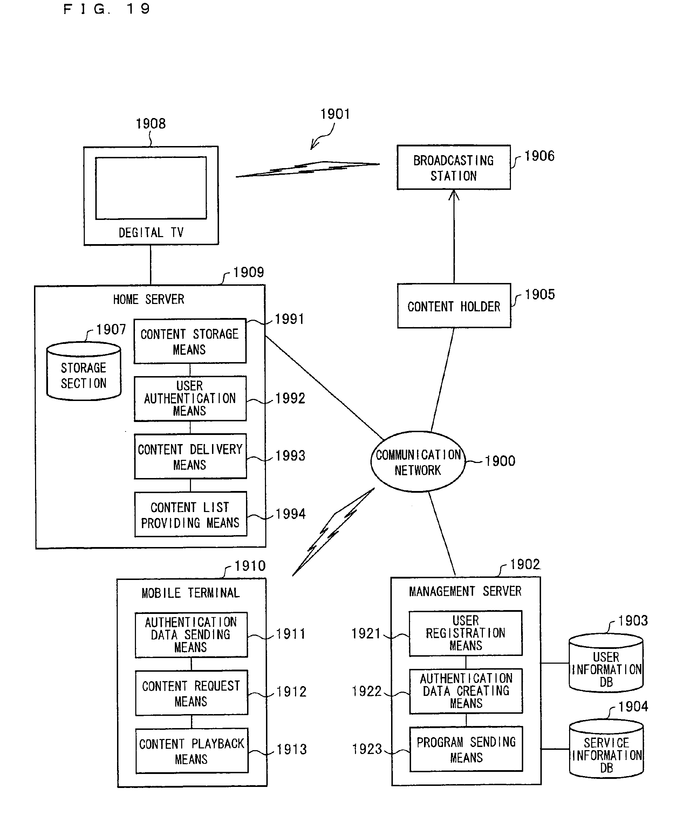

Fig. 19 is a block diagram illustrating a content delivery system disclosed in Patent Literature 1. In the content delivery system illustrated in Fig. 19, a user receives broadcasted content by using a home server 1909, and stores the content in a storage section 1907. In a case where a user wants to deliver the content thus stored to a mobile terminal 1910, the user sends authentication data to the home server 1909 from the mobile terminal 1910. Then, the home server 1909 confirms that the mobile terminal 1910 has been already stored registered by the user. After the confirmation, the home server 1909 delivers, to the mobile terminal 1910, content designated by the user from among the content stored in the storage section 1907.

Meanwhile, Patent Literature 2 discloses a content delivery system that allows a user to establish the same environment for viewing and listening to programs in accommodations, such as a hotel where the user stays during a trip, as the environment in the user's home. In the content delivery system disclosed in Patent Literature 2, descrambling is carried out by checking key information so as to make it possible to view and listen to the content. Patent Literature 2 discloses a technique of sending the key information from a mobile terminal. With the technique, the user only has to have the mobile terminal to descramble the system so that the user can view and listen to the content even when the user stays in accommodations, such as a hotel, and, as a matter of course, when being at home.

If a user is in the second place, and views and listens to the content stored in the user's home, various problems may occur due to a condition where the access from the second place to the user's home continues to be available. For example, another person may access the content stored in the user's home in such a manner that the user does not intend that the content is accessed, or the content may be used beyond an authorized range of personal use.

Therefore, in order to prevent such problems, it is necessary to make it impossible for anyone to view and listen to, outside the user's home, the content stored in the user's home at appropriate timing. That is, it is necessary to nullify an access authority with respect to the content stored in the user's home. As a technique for nullifying the access authority at appropriate timing, a technique disclosed in Patent Literature 3 has been publicly known.

According to the technique disclosed in Patent Literature 3, in such a service providing system that a service providing server on a communication network provides service and a user uses the service on a user's terminal via a host device connected to the user's terminal, it is possible to nullify an authentication state at timing when a connection is interrupted between the user's terminal and the host device. That is, without the user carrying out any processing, the access authority with respect to the service providing server can be nullified at appropriate timing.

### Citation List

Patent Literature 1
   Japanese Patent Application Publication, *Tokukai*, No. 2003-37802 A (Publication Date: February 7, 2003)
Patent Literature 2
   Japanese Patent Application Publication, *Tokukai*, No. 2001-345766 A (Publication Date: December 14, 2001)
Patent Literature 3
   Japanese Patent Application Publication, *Tokukai*, No. 2005-99980 A (Publication Date: April 14, 2005)

### Summary of Invention

However, with the conventional arrangements described above, it is impossible to view and listen to the content, stored in a user's home, on a playback terminal, such as a TV, in the second place.

The following further explains this problem.

With the technique disclosed in Patent Literature 1, it is possible to view and listen to content stored in the user's house only on a mobile terminal, and the user cannot view and listen to the content on a TV in the second place. That is, even if there is a large screen TV in the second place, the user cannot play back the content on the TV but only on a small screen of a mobile phone.

According to the technique disclosed in Patent Literature 2, if a TV is available in accommodations, such as a hotel, the user can view and listen to the content on the TV. However, the target content of the technique is limited to only content directly received from a specific content provider. The technique does not target the delivery of the content that has been stored in the home server in the user's home. If the user is in a place away from the user's home, and wants to view, on a TV, the TV program recorded in the user's home, the user cannot view the TV program unless the TV program is distributed by the specific content provider.

In order that the user views and listens to, on a playback terminal in the second place, the content stored in a server in the user's home, it is necessary to, at least, connect the user's home to the second place in some way. Further, depending on a user, a destination to which the playback terminal is connected has to be changed. For example, a guest "A" needs the playback terminal to be connected to a guest A's home, and a guest "B" needs the playback terminal to be connected to a guest B's home.

However, in the technique disclosed in Patent Literature 2, a TV, which is the playback terminal, is arranged to access a predetermined specific server. That is, with the technique, it is impossible to play back the content stored in a server, which differs depending on a user, in the user's home.

Furthermore, since a user views and listens to, on a playback terminal in a place away from the user's home, the content stored in the server in the user's home, the server in the user's home is accessed from a place C when the user visits the place C, meanwhile, the server is accessed from a place D when the user visits the place D. In other words, another problem arises, that is, how the server gives authentication to access from a playback terminal that is not specified in advance.

Meanwhile, in the system disclosed in Patent Literature 1, a user views and listens to the content on a mobile terminal, which is an access terminal, by accessing the content delivery system from the mobile terminal. The mobile terminal knows where the content delivery system is, so that the content delivery system only has to authenticate the mobile terminal, which is the access terminal.

In the same manner, in the system disclosed in Patent Literature 2, the user can view and listen to the content on a TV, which is the access terminal, by accessing the content delivery system from a playback terminal, such as the TV. The TV knows in advance where the predetermined content delivery system is, so that the content delivery system only has to authenticate the TV, which is the access terminal.

In a case where the server provided in a user's home is accessed from only the user's mobile terminal, as in Patent Literature 1, the server does not have any problems. However, in a case where the server provided in the user's home is accessed from a TV in the second place, it is necessary for the server to determine whether or not the server is allowed to send the content to the destination.

Moreover, if a state where the content in the user's home can be accessed continues after it becomes possible to access the content in the user's home, there may be such a problem that the content may be accessed from the second place in such a manner that the user does not intend that the content is accessed. On the other hand, the system disclosed in Patent Literature 3 makes it possible to nullify the access authority with respect to the content stored in the user's home at timing when the devices that carried out the authentication are disconnected to each other. This can prevent the state where the content can be accessed from continuing.

However, the access from the second place to the user's home may include access, to the content stored in the user's home, from a device other than the device that carried out the authentication. Therefore, if the access authority is merely nullified at timing when the devices that carried out the authentication are disconnected to each other, as in the system disclosed in Patent Literature 3, various problems may occur.

For example, a user accesses the content server, in which the content is stored, provided in the user's home, from a content playback terminal in the second place, via a home server, which is a gateway in a home network, and an external server, which is a gateway in a network in the second place. In this case, the authentication may be carried out by use of a mobile terminal so that the external server accesses the home server. However, if the system disclosed in Patent Literature 3 is applied to this arrangement, it becomes impossible to access the content in the user's home from the content playback terminal in the second place when the mobile terminal and the home server are disconnected to each other. In other words, even if the content playback device in the second place is playing back the content stored in the user's home, the disconnection between the mobile terminal and the home server causes nullification of the access authority with respect to the content in the user's home. Therefore, it becomes impossible to continue to play back the content.

Further, there may be another arrangement in which the access authority is nullified at timing when a continuous communication between the content playback terminal provided in the second place and the content server provided in the user's home is disconnected. However, the DLNA employs a TCP/IP-based connection, for example. In this case, depending on the condition of the player in use, there is a possibility that the connection is temporarily shut down during the access from the device in the second place to the content in the user's home, such as a pause in the playback of the content. At this time, once the access authority is nullified, the user has to carry out the authentication again when canceling the pause to trying to play back the content.

The present invention is made in view of the problems. An object of the present invention is to provide: a content delivery server; a content providing server; a content delivery system; a content delivery method; a content providing method; a terminal device; a control program; and a computer-readable storage medium, each of which realizes a system in which it is possible to (i) view and listen to, on a playback terminal, such as a TV, provided in a second place, content stored in a server or the like in a user's home, and (ii) make it impossible to access the content on a network in the user's home at appropriate timing.

A content delivery server according to the present invention, for delivering content, managed by a content providing server outside a local network to which the content delivery server belongs, to a content playback device which is in the local network and plays back the content, includes: authentication information obtaining means for obtaining, via a terminal device carried by a user, authentication information which is necessary for the content delivery server to access the content providing server so as to obtain the content; access authority obtaining means for obtaining an access authority to access the content providing server from the content providing server, based on the authentication information; and access authority nullifying means for nullifying the access authority in a case where, after the access authority is obtained, a communication is interrupted between the content delivery server and the terminal device.

With the arrangement, the content delivery server of the present invention delivers the content managed by the content providing server to the content playback device managed by the content delivery server. That is, the content delivery server accesses the content providing server.

The content managed by the content providing server is stored in a device which is connected to the network to which the content providing server belongs. The content may be, but not limited to, various content, such as a moving image, music, or a still image, which a user can view or listen to. Further, the content playback device may be, but not limited to, various devices for playing back the various content described above, such as a TV, a PC, or audio equipment.

Furthermore, with the arrangement described above, in the content delivery server, the authentication information obtaining means obtains, via the terminal device carried by the user, the authentication information issued by the content providing server. The authentication information is information for proving the access authority with respect to the content providing server, and may be, for example, a password for accessing the content providing server.

Moreover, with the arrangement, in the content delivery server, the access authority obtaining means obtains the access authority to access the content providing server from the content providing server. The following is an example of an arrangement of access authority management, for example. The content providing server checks whether or not the access from the content delivery server is permitted under a current condition, in a case where the content delivery server accesses the content providing server. If the access is not permitted under the current condition, the content providing server checks whether or not the content delivery server originally has the access authority. In this authentication, by presenting the authentication information to the content providing server, the content delivery server proves that the content delivery server has the access authority with respect to the content providing server. Then, the content providing server permits the content delivery server to access the content providing server. This allows the content delivery server to receive the content or a content list from the content providing server. That is, the access authority obtaining means obtains the access authority from the content providing server.

Further, with the arrangement, in the content delivery server, the access authority nullification means nullifies the access authority, in a case where (i) the content delivery server is permitted to access the content providing server by the content providing server (that is, the content delivery server has the access authority), and (ii) it becomes impossible to confirm the presence of the terminal device (that is, a communication is interrupted between the content delivery server and the terminal device).

The nullification of the access authority is carried out in the following manner, for example. The content providing server is arranged to have access possible/impossible information indicating whether or not the content providing server permits the access from the content delivery server. The content providing server determines, by referring to the access possible/impossible information, whether or not the access is possible, when the content delivery server accesses the content providing server. With the arrangement, the nullification of the access authority is carried out by arranging the access possible/impossible information to indicate that the access is not permitted. In this case, the content delivery server requests the content providing server not to permit the access from the content delivery server, and the content providing server sets the access possible/impossible information in accordance with the request thus received.

Alternatively, for example, the content delivery server is arranged to have content request possible/impossible information indicating whether or not a content request is permitted to be sent to the content providing server when the content delivery server receives a request (content request) to play back the content from the content playback device managed by the content delivery server. The content delivery server determines, by referring to the content request possible/impossible information, whether or not the content delivery server is permitted to send the content request received from the content playback device to the content providing server, when the content playback device sends the content request to the content delivery server. With the arrangement, the nullification of the access authority is carried out by arranging the content request possible/impossible information to indicate that the content delivery server is not permitted to send the content request. The nullification of the access authority is not particularly limited, and may be carried out in any way.

As a method for recognizing the presence of the terminal device, for example, in a case where the terminal device is connected to the network to which the content delivery server belongs, it is possible for the content delivery server to confirm the presence of the terminal device by (i) sending a ping message to the terminal device and (ii) checking whether or not the terminal device replies to the message. Alternatively, in a case where the terminal device emits electric waves, it is possible to confirm the presence of the terminal device by detecting the electric waves. The presence of the terminal device may be confirmed in any way.

In other words, with the arrangement, at timing when it becomes impossible to confirm the presence of the terminal device, the access from the content delivery server to the content providing server becomes unavailable, in other words, the access authority is nullified.

For example, the content providing server is provided in the user's home, and the content delivery server is provided in the second place. The user, who owns the content managed by the content providing server in the user's home, views and listens to the content on the content playback device managed by the content delivery server in the second place, and then leaves the second place, for example. At this time, it becomes impossible for the content delivery server to recognize the terminal device carried by the user, so that the access from the content delivery server to the content providing server becomes unavailable. Therefore, it becomes possible to prevent the content stored in the user's home from being accessed from outside in such a manner that the user does not intend that the content is accessed.

A content delivery method according to the present invention, for delivering content, managed by a content providing server outside a local network to which a content delivery server belongs, to a content playback device which is in the local network and plays back the content, includes the steps of: obtaining, via a terminal device carried by a user, authentication information which is necessary for the content delivery server to access the content providing server so as to obtain the content; obtaining an access authority to access the content providing server from the content providing server, based on the authentication information; and nullifying the access authority in a case where, after the access authority is obtained, a communication is interrupted between the content delivery server and the terminal device.

With the arrangement, it is possible to have the same effect as the content delivery server of the present invention.

Further, a content delivery server according to the present invention, for delivering content, managed by a content providing server outside a local network to which the content delivery server belongs, to a content playback device which is in the local network and plays back the content, includes: authentication information obtaining means for obtaining, via a terminal device carried by a user, authentication information which is necessary for the content delivery server to access the content providing server so as to obtain the content; access authority obtaining means for obtaining an access authority to access the content providing server from the content providing server, based on the authentication information; and access authority nullifying means for nullifying the access authority in a case where, after the access authority is obtained, an elapsed period since the access authority was obtained exceeds an available period which is set by the user with respect to the access authority.

With the arrangement, in the content delivery server, in a case where the content delivery server is permitted to access the content providing server by the content providing server (that is, the content delivery server has the access authority), the access authority nullification means nullifies the access authority in a case where the elapsed period since the access was permitted (that is, an elapsed period since the access authority was obtained) exceeds the available period, in which the access is permitted, set by the user with respect to the access authority.

This causes the content providing server not to permit the access from the content delivery server. Even if, for example, the content delivery server requests the content providing server to provide the content or the content list to the content delivery server, the content providing server does not provide the content or the content list to the content delivery server.

The available period of the access authority can be set, for example, in such a manner that a user inputs the available period into the terminal device, and sends the available period to the content providing server. Alternatively, the available period can be set in such a manner that the user directly inputs the available period by operating a controller of the content delivery server. The available period can be set in any way.

That is, with the arrangement, at timing when the available period of the access authority elapses after the access is permitted, the access from the content delivery server to the content providing server becomes unavailable, that is, the access authority is nullified.

For example, the content providing server is provided in the user's home, and the content delivery server is provided in the second place. The user, who owns the content managed by the content providing server in the user's home, views and listens to the content on the playback device managed by the content delivery server in the second place, for example. In this case, the access from the content delivery server to the content providing server becomes unavailable at timing the available period of the access authority elapses. Therefore, it becomes possible to prevent the content stored in the user's home from being accessed from outside in such a manner that the user does not intend the content is accessed.

A content delivery method according to the present invention, for delivering content, managed by a content providing server outside a local network to which a content delivery server belongs, to a content playback device which is in the local network and plays back the content, includes the steps of: obtaining, via a terminal device carried by a user, authentication information which is necessary for the content delivery server to access the content providing server so as to obtain the content; obtaining an access authority to access the content providing server from the content providing server, based on the authentication information; and nullifying the access authority in a case where, after the access authority is obtained, an elapsed period since the access authority was obtained exceeds an available period, which is set by the user with respect to the access authority.

With the arrangement, it is possible to have the same effect as the content delivery server of the present invention.

Further, a content delivery server according to the present invention, for delivering content, managed by a content providing server outside a local network to which the content delivery server belongs, to a content playback device which is in the local network and plays back the content, includes: authentication information obtaining means for obtaining, via a terminal device carried by a user, authentication information which is necessary for the content delivery server to access the content providing server so as to obtain the content; access authority obtaining means for obtaining an access authority to access the content providing server from the content providing server, based on the authentication information; playback function termination detecting means for detecting a termination of a playback function of the content playback device; and access authority nullifying means for nullifying the access authority in a case where, after the access authority is obtained, the playback function termination detecting means detects a termination of the playback function.

With the arrangement, in the content delivery server, the playback function termination detecting means detects a termination of the playback function of the content playback device. Then, in a case where (i) the content delivery server is permitted to access the content providing server by the content providing server (that is, the content delivery server has the access authority), and (ii) the playback function termination detecting means detects the termination of the playback function, the access authority nullification means nullifies the access authority. This causes the content providing server to stop permitting the access from the content delivery server from then on. Even if, for example, the content delivery server requests the content providing server to provide the content or the content list to the content delivery server, the content providing server dose not provide the content or the content list to the content delivery server.

The termination of the content playback device includes a termination caused by turning off the content playback device, and also, a termination caused by finishing the application for controlling the playback of the content on the content playback device. Further, in a case where the content playback device has functions other than the function of playing back the content, the termination may be caused by switching over the playback function to another function. The termination of the content playback device is not particularly limited as long as, in the content playback device, the content playback function is stopped being used.

That is, with the arrangement, at timing when, in the content playback device, the content playback function is stopped being used, the access from the content delivery server to the content providing server becomes unavailable, that is, the access authority is nullified.

For example, the content providing server is provided in the user's home, and the content delivery server is provided in the second place. The user, who owns the content managed by the content providing server in the user's home, views and listens to the content on the playback device managed by the content delivery server in the second place, for example. In this case, if the content playback function is terminated, the access from the content delivery server to the content providing server becomes unavailable. Therefore, it becomes possible to prevent the content stored in the user's home from being accessed from outside in such a manner that the user does not intend that the content is accessed.

A content delivery method according to the present invention, for delivering content, managed by a content providing server outside a local network to which a content delivery server belongs, to a content playback device which is in the local network and plays back the content, includes the steps of: obtaining, via a terminal device carried by a user, authentication information which is necessary for the content delivery server to access the content providing server so as to obtain the content; obtaining an access authority for accessing the content providing server from the content providing server, based on the authentication information; detecting a termination of a playback function of the content playback device; and nullifying the access authority in a case where, after the access authority is obtained, a termination of the playback function is detected in said step of detecting a termination.

With the arrangement, it is possible to have the same effect as the content delivery server of the present invention.

Further, a content delivery server according to the present invention, for delivering content, managed by a content providing server outside a local network to which the content delivery server belongs, to a content playback device which is in the local network and plays back the content, includes: authentication information obtaining means for obtaining, via a terminal device carried by a user, authentication information which is necessary for the content delivery server to access the content providing server so as to obtain the content; access authority obtaining means for obtaining an access authority to access the content providing server from the content providing server, based on the authentication information; playback condition detecting means for detecting a playback condition of the content of the content playback device; and access authority nullifying means for nullifying the access authority in a case where, after the access authority is obtained, a period that is determined in accordance with the playback condition elapses.

With the arrangement, in the content delivery server, the playback condition detecting means detects the playback condition of the content playback device. Then, in a case where (i) the content delivery server is permitted to access the content providing server by the content providing server (that is, the content delivery server has the access authority), and (ii) the period that is determined in accordance with the playback condition of the content on the content playback device elapses, which playback condition is detected by the playback condition detecting means, (that is, in a case where the available period set with respect to the access authority in accordance with the playback condition elapses), the access authority nullification means nullifies the access authority. This causes the content providing server to stop permitting the access from the content delivery server from then on. Even if the content delivery server requests the content providing server to provide the content or the content list to the content delivery server, the content providing server does not provide the content or the content list to the content delivery server.

The condition regarding the playback of the content includes: a condition of starting to play back the content; a condition of stopping the playback; a condition of suspending the playback; and a condition before the playback of the content. The condition is not particularly limited, as long as the condition is a condition related to the playback of the content. The period is determined in accordance with the playback condition of the content. For example, a relatively-long period is set at the time immediately after the playback of the content is started, or a relatively-short period is set when the playback is completed to the end of the content, and stopped.

In other words, with the arrangement, the available period in which the access is available is set in accordance with the condition related to the playback of the content. At timing when the available period expires, the access from the content delivery server to the content providing server becomes unavailable, that is, the access authority is nullified.

For example, the content providing server is provided in the user's home, and the content delivery server is provided in the second place. The user, who owns the content managed by the content providing server in the user's home, views and listens to the content on the playback device managed by the content delivery server in the second place, for example. In this case, if the available period set in accordance with the condition related to the playback of the content expires, the access from the content delivery server to the content providing server becomes unavailable. Therefore, it becomes possible to prevent the content stored in the user's home from being accessed from outside in such a manner that the user does not intend that the user does not intend that the content is accessed.

A content delivery method according to the present invention, for delivering content, managed by a content providing server outside a local network to which a content delivery server belongs, to a content playback device which is in the local network and plays back the content, includes the steps of: obtaining, via a terminal device carried by a user, authentication information which is necessary for the content delivery server to access the content providing server so as to obtain the content; obtaining an access authority to access the content providing server from the content providing server, based on the authentication information; detecting a playback condition of the content of the content playback device; and nullifying the access authority in a case where, after the access authority is obtained, a period that is determined in accordance with the playback condition elapses.

With the arrangement, it is possible to have the same effect as the content delivery server of the present invention.

Further, a content delivery server according to the present invention, for delivering content, managed by a content providing server outside a local network to which the content delivery server belongs, to a content playback device which is in the local network and plays back the content, includes: authentication information obtaining means for obtaining, via a terminal device carried by a user, authentication information which is necessary for the content delivery server to access the content providing server so as to obtain the content; access authority obtaining means for obtaining an access authority to access the content providing server from the content providing server, based on the authentication information; and access authority nullifying means for nullifying the access authority in a case where, after the access authority is obtained, an external content delivery server that is different from said content delivery server obtains the access authority by use of the authentication information obtained via the terminal device.

With the arrangement, in the content delivery server, in a case where the content delivery server is permitted to receive the content from the content providing server (that is, the content delivery server has the access authority), if the external content delivery server is permitted to access the content providing server (that is, the external content delivery server obtains the access authority with respect to the content providing server), the access authority nullification means nullifies the access authority.

This causes the content providing server not to permit any access but only from the external content delivery server. For example, even if the content delivery server requests the content providing server to provide the content or the content list to the content delivery server, the content providing server does not provide the content or the content list to the content delivery server. Here, via the same terminal device, both the external content delivery server and the content delivery server obtain content providing server identifying information and the authentication information, and are authenticated by the content providing server.

In other words, with the arrangement, in a case where a first content delivery server is permitted to access the content providing server by the content providing server, the access from the first content delivery server to the content providing server becomes unavailable (that is, the access authority is nullified) at timing when a second content delivery server is permitted to access the content providing server by the content providing server. Via the same terminal device, both the first content delivery server and the second content delivery server obtain the content providing server identifying information and the authentication information, and are authenticated by the content providing server.

For example, the content providing server is provided in the user's home, the content delivery server is provided in the second place, and the external content delivery server is provided in the third place. The user, who owns the content managed by the content providing server in the user's home, views and listens to the content on the content playback device managed by the content delivery server in the second place, and then the user moves from the second place to the third place to view and listen to the content on the content playback device managed by the external content delivery server, for example. In this case, if the external content delivery server is permitted to access the content providing server by the content providing server, the access from the content delivery server to the content providing server becomes unavailable. Therefore, it becomes possible to prevent the content stored in the user's home from being accessed from outside in such a manner that the user does not intend that the content is accessed.

A content delivery method according to the present invention, for delivering content, managed by a content providing server outside a local network to which a content delivery server belongs, to a content playback device which is in the local network and plays back the content, comprising the steps of: obtaining, via a terminal device carried by a user, authentication information which is necessary for the content delivery server to access the content providing server so as to obtain the content; obtaining an access authority to access the content providing server from the content providing server, based on the authentication information; and nullifying the access authority in a case where, after the access authority is obtained, an external content delivery server that is different from said content delivery server obtains the access authority from the content providing server by use of the authentication information obtained via the terminal device.

With the arrangement, it is possible to have the same effect as the content delivery server of the present invention.

A content delivery server according to the present invention, for delivering content, managed by a content providing server outside a local network to which the content delivery server belongs, to a content playback device which is in the local network and plays back the content, includes: authentication information obtaining means for obtaining, via a terminal device carried by a user, authentication information which is necessary for the content delivery server to access the content providing server so as to obtain the content; access authority obtaining means for obtaining an access authority to access the content providing server from the content providing server, based on the authentication information; power-off detecting means for detecting power-off of the content playback device; and access authority nullifying means for nullifying the access authority in a case where, after the access authority is obtained, power-off of the content playback device is detected.

With the arrangement, the power-off detecting means detects the power-off of the content playback device. Then, in a case where (i) the content delivery server is permitted to access the content providing server by the content providing server (that is, the content delivery server has the access authority), and (ii) the power-off detecting means detects the power-off of the content playback device, the access authority nullification means nullifies the access authority. This causes the content providing server to stop permitting the access from the content delivery server. For example, even if the content delivery server requests the content providing server to provide the content or the content list to the content delivery server, the content providing server does not provide the content or the content list to the content delivery server.

For example, the content providing server is provided in the user's home, and the content delivery server is provided in the second place. The user, who owns the content managed by the content providing server in the user's home, views and listens to the content on the playback device managed by the content delivery server in the second place, for example. In this case, if the content playback device is turned off, the access from the content delivery server to the content providing server becomes unavailable. Therefore, it becomes possible to prevent the content stored in the user's home from being accessed from outside in such a manner that the user does not intend that the content is accessed.

A content delivery method according to the present invention, for delivering content, managed by a content providing server outside a local network to which a content delivery server belongs, to a content playback device which is in the local network and plays back the content, comprising the steps of: obtaining, via a terminal device carried by a user, authentication information which is necessary for the content delivery server to access the content providing server so as to obtain the content; obtaining an access authority to access the content providing server from the content providing server, based on the authentication information; detecting power-off of the content playback device; and nullifying the access authority in a case where, after the access authority is obtained, power-off of the content playback device is detected.

With the arrangement, it is possible to have the same effect as the content delivery server of the present invention.

In the content delivery server according to the present invention, the playback condition detecting means preferably detects, as the playback condition, a fact that the content playback device has obtained a list of content.

With the arrangement, the period is determined in the content delivery server in accordance with a fact that a list of content is obtained. This makes it possible to set the available period of the access authority in accordance with a situation where the user is about to view and listen to the content after the list of the content is obtained.

In the content delivery server according to the present invention, the playback condition detecting means detects, as the playback condition, a fact that the content playback device temporarily has suspended a playback of the content during the playback of the content.

With the arrangement, the period is determined in the content delivery server in accordance with a fact that a playback of the content of the content playback device is suspended during the playback of the content. This makes it possible to set the available period of the access authority in accordance with a situation where the playback of certain content has been suspended during the playback (that is, there is a possibility that the playback of the content is restarted).

In the content delivery server according to the present invention, the playback condition detecting means detects, as the playback condition, a fact that the content playback device has finished playing back the content to the end of the content.

With the arrangement, the period is determined in the content delivery server in accordance with a fact that the content playback device has finished playing back the content to the end of the content. This makes it possible to set the available period of the access authority in accordance with a situation where the playback of certain content has been finished to the end of the content (that is, the user has finished viewing and listening to the content).

In the content delivery server according to the present invention, the playback condition detecting means detects, as the playback condition, a fact that the content playback device has finished playing back all of the content managed by the content providing server.

With the arrangement, the period is determined in the content delivery server in accordance with a fact that the content playback device has finished playing back all of the content managed by the content providing server. This makes it possible to set the available period of the access authority in accordance with a situation where the playback of the all of the content managed by the content providing server has been finished (that is, the user has finished viewing and listening to all of the content, and there is no other content that has not been viewed and listened to by the user).

The content delivery server according to the present invention preferably includes a content playback device for playing back the content.

With the arrangement, the content delivery server is arranged integral with the content playback device. This allows the content delivery server to easily detect the playback condition of the content or a termination condition of the playback function. Further, it becomes possible to cut an installation space for the devices, and make it easy for a user to manage the devices.

A content providing server according to the present invention, outside a network to which the content delivery server belongs, includes: content delivery server access authority nullifying means for nullifying the access authority at a request of the content delivery server.

With the arrangement, in the content providing server of the present invention, the content delivery server access authority nullification means responds to the request of the content delivery server so as to stop permitting the access from the content delivery server, that is, the access authority is nullified. In other words, the content delivery server sends the content providing server data that requests the content providing server to stop permitting the access from the content delivery server. At timing when the content providing means receives the message, the content providing server stops permitting the access from the content delivery server. Then, in a case where the content delivery server accesses the content providing server, the content providing server carries out the authentication again. If the access authority of the content delivery server is proved, the content providing server permits the access from the content delivery server. The content delivery server sends the data to the content providing server at appropriate timing.

For example, the content providing server is provided in the user's home, and the content delivery server is provided in the second place. The user, who owns the content managed by the content providing server in the user's home, views and listens to the content on the content playback device managed by the content delivery server in the second place, for example. In this case, after the user views and listens to the content, the access from the content delivery server to the content providing server becomes unavailable at appropriate timing. Therefore, it becomes possible to prevent the content stored in the user's home from being accessed from outside in such a manner that the user does not intend that the content is accessed.

A content providing method according to the present invention includes the step of rejecting access from the content delivery server at a request of the content delivery server.

A content providing method according to the present invention includes the step of nullifying the access authority at a request of the content delivery server.

With the arrangement, it is possible to have the same effect as the content delivery server of the present invention.

In the content providing server according to the present invention, the content delivery server access authority nullifying means nullifies the access authority at a request of the terminal device.

With the arrangement, in the content providing server, the content delivery server access authority nullification means stops permitting the access from the content delivery server at the request of the terminal device, that is, the access authority is nullified. The user sends the content providing server data that requests the content providing server to reject the access from the content delivery server by operating the terminal device. Therefore, if the user has the terminal device, the user can arrange the content providing server not to permit the access from the content delivery server at appropriate timing, that is, the user can prevent the content stored in the user's home from being accessed from outside in such a manner that the user does not intend that the content is accessed.

A terminal device according to the present invention includes: content providing server authentication information obtaining means for obtaining the authentication information from the content providing server; and content providing server authentication information providing means for providing the authentication information obtained by the content providing server authentication information obtaining means to the content delivery server.

With the arrangement, in the terminal device, the content providing server authentication information obtaining means obtains the authentication information, and the content providing server authentication information providing means provides the authentication information thus obtained to the content providing server.

For example, the content providing server is provided in the user's home, and the content delivery server is provided in the second place. The user, who owns the content managed by the content providing server in the user's home, views and listens to the content on the content playback device managed by the content delivery server in the second place, for example. In this case, in the authentication carried out by the content providing server, the content delivery server is permitted to access the content providing server by presenting the authentication information obtained from the terminal device. Therefore, the content delivery server can receive the content from the content providing server, and deliver the content to the content playback device, so that the user can view and listen to the content.

A content delivery system according to the present invention includes: the content delivery server; the content providing server; the terminal device; and the content playback device which belongs to the local network to which the content delivery server belongs, and plays back the content delivered by the content delivery server, the content providing server nullifying the access authority of the content delivery server or the access authority of the external content delivery server at the request of the content delivery server.

With the arrangement, the content delivery system includes the content delivery server, the content providing server, the terminal device, and the content playback device. With the arrangement, the content providing server nullifies the access authority of the content delivery server at the request of the content delivery server. The content delivery server requests the content providing server to stop permitting the access from the content delivery server at appropriate timing. Then, the content providing server stops permitting the access from the content delivery server when receiving the request from the content delivery server. That is, the content providing server nullifies the access authority of the content delivery server at appropriate timing.

For example, the content providing server is provided in the user's home, and the content delivery server is provided in the second place. The user, who owns the content managed by the content providing server in the user's home, views and listens to the content on the content playback device managed by the content delivery server in the second place, for example. In this case, after the user views and listens to the content, the access from the content delivery server to the content providing server becomes unavailable at appropriate timing. Therefore, it becomes possible to prevent the content stored in the user's home from being accessed from outside in such a manner that the user does not intend that the content is accessed.

The content delivery server can be realized by a computer. In this case, the present invention includes an information processing program for realizing the content delivery server on a computer by operating the computer to function as each of the means, and a computer-readable storage medium in which the information processing program is stored.

Further, the content providing server can be realized by a computer. In this case, the present invention includes an information processing program for realizing the content providing server on a computer by operating the computer to function as each of the means, and a computer-readable storage medium in which the information processing program is stored.

Additional objects, features, and strengths of the present invention will be made clear by the description below. Further, the advantages of the present invention will be evident from the following explanation in reference to the drawings.

### Brief Description of Drawings

Fig. 1

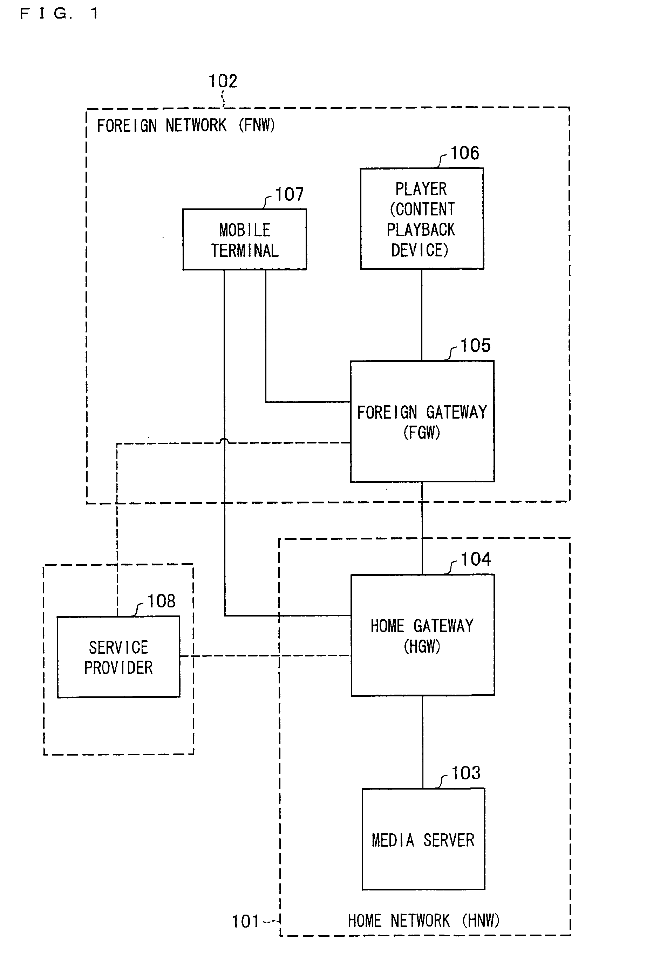

   Fig. 1 is a block diagram schematically illustrating a content delivery system in accordance with one embodiment of the present invention.
Fig. 2

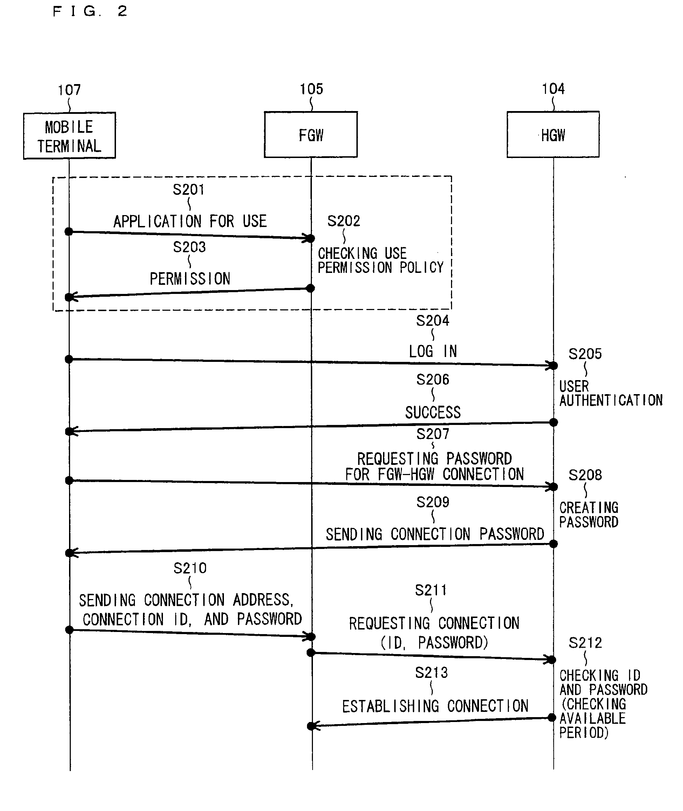

   Fig. 2 is a sequence diagram illustrating a procedure in which a foreign gateway is connected to a home gateway by use of authentication information which is obtained via a mobile terminal, in accordance with one embodiment of the present invention.
Fig. 3

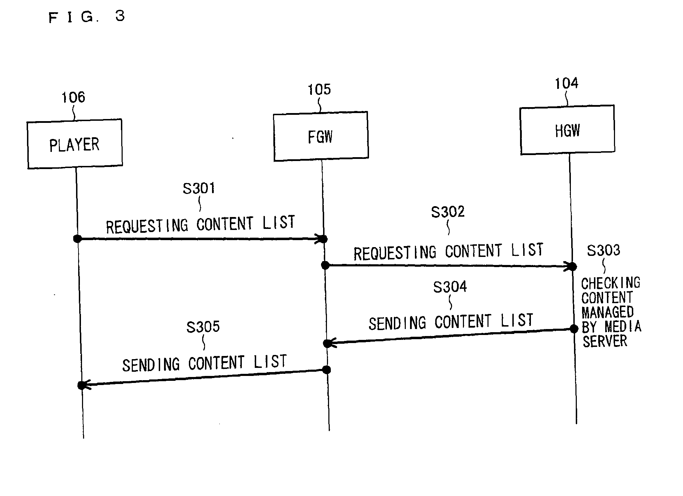

   Fig. 3 is a sequence diagram illustrating a procedure in which a player obtains a content list, in accordance with one embodiment of the present invention.
Fig. 4

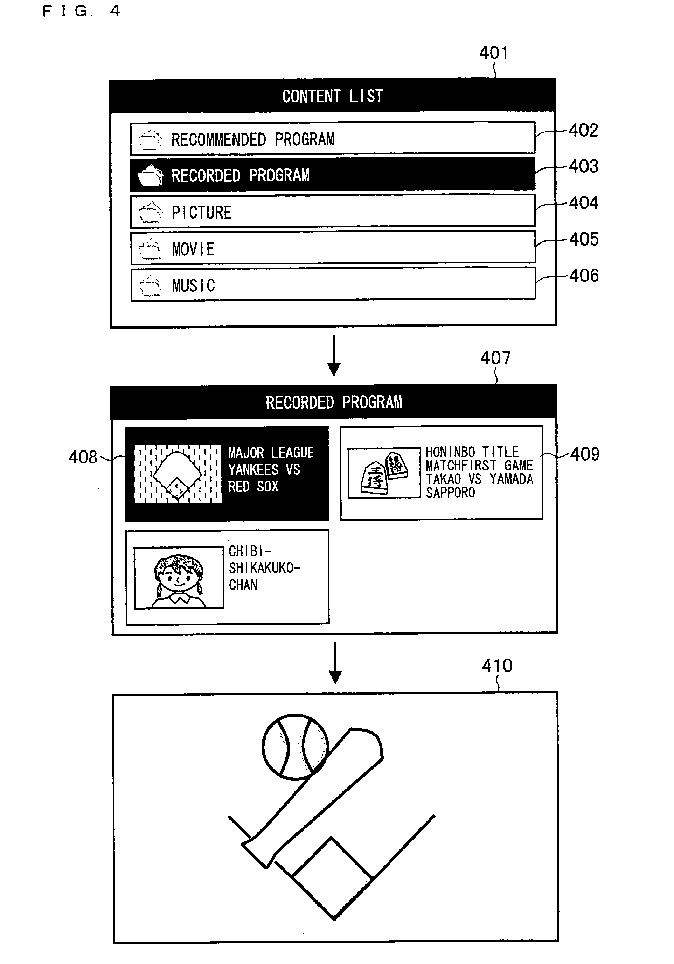

   Fig. 4 is a view illustrating an example of a display screen displayed on the player in accordance with one embodiment of the present invention.
Fig. 5

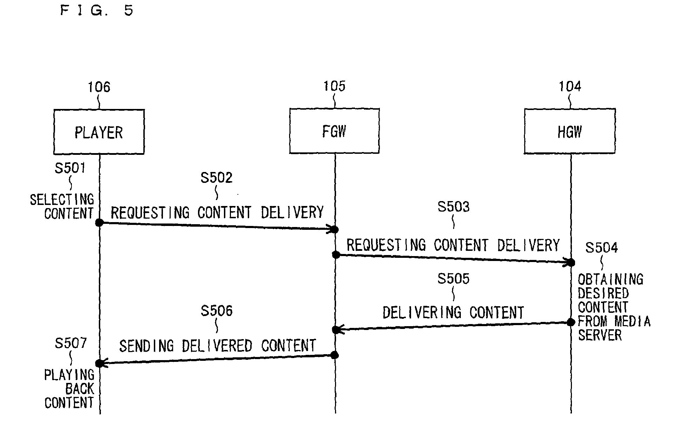

   Fig. 5 is a sequence diagram illustrating a procedure in which a designated content is played back, in accordance with one embodiment of the present invention.
Fig. 6

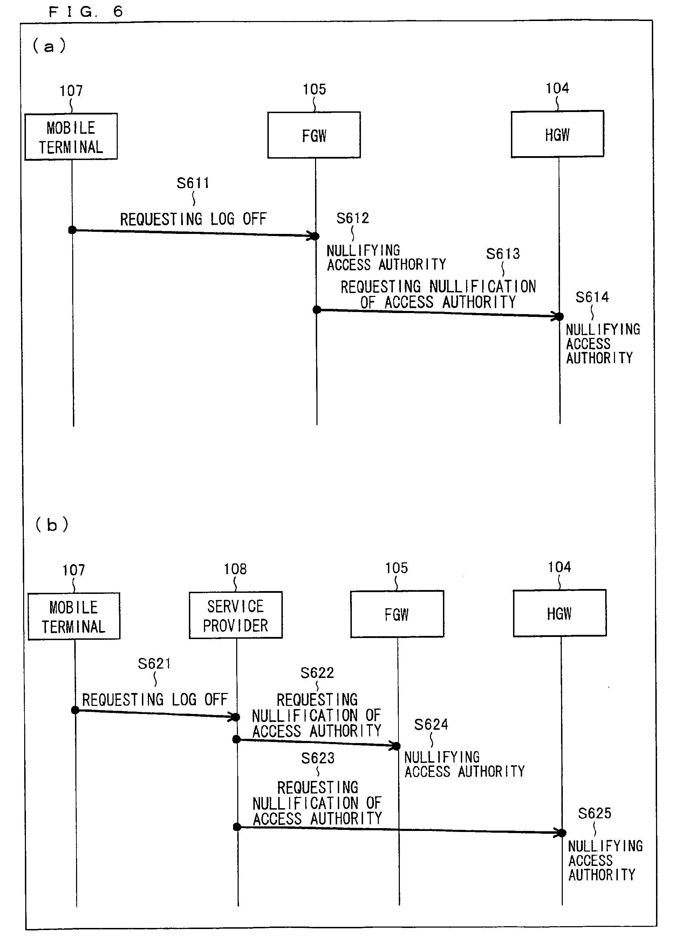

   Fig. 6 is a sequence diagram illustrating a procedure in which access authority is nullified, in accordance with the first embodiment of the present invention ((a) of Fig. 6 is a sequence diagram illustrating a procedure in which an access authority of the foreign gateway is nullified at a request of the mobile terminal, and (b) of Fig. 6 is a sequence diagram illustrating a procedure in which the access authority of the foreign gateway is nullified via a service provider).
Fig. 7

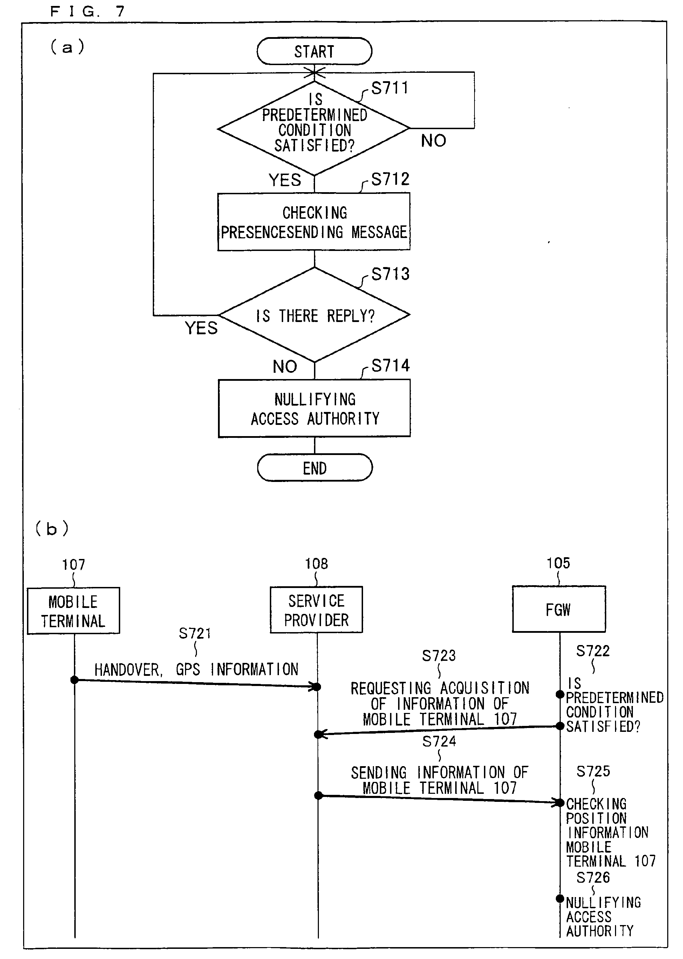

   Fig. 7 is a sequence diagram illustrating a procedure on which the access authority is nullified, in accordance with the first embodiment of the present invention ((a) of Fig. 7 is a flow chart illustrating a flow of processing for nullifying the access authority of the foreign gateway depending on the presence or absence of the mobile terminal, and (b) of Fig. 7 is a sequence diagram illustrating a procedure in which the access authority of the foreign gateway is nullified via the service provider in accordance with a change in position of the mobile terminal).
Fig. 8

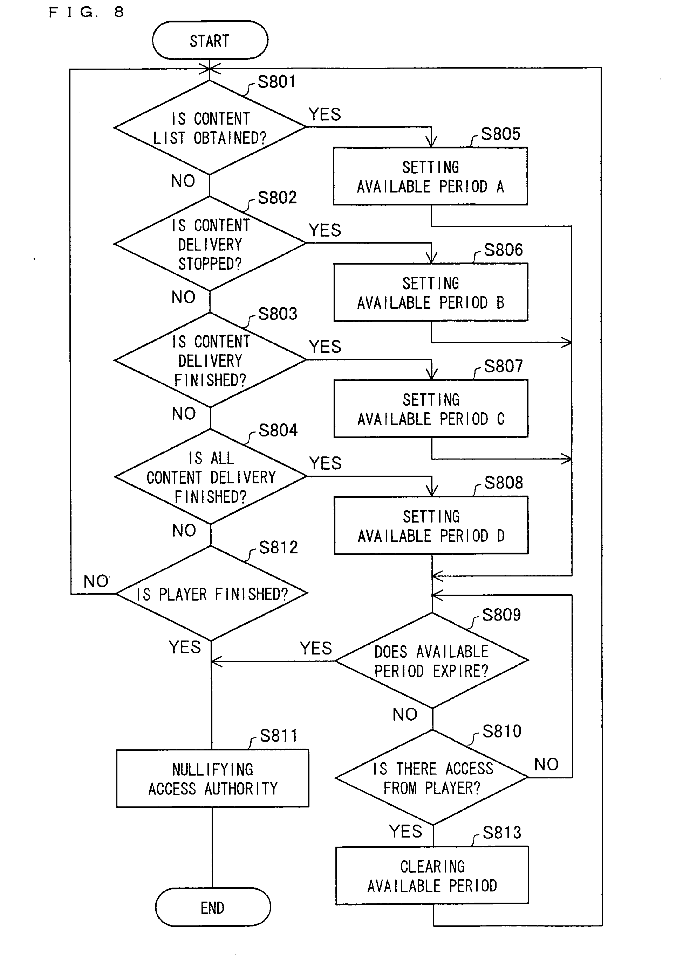

   Fig. 8 is a flow chart illustrating a flow of processing for nullifying the access authority in a case where an available period is set so that the foreign gateway nullifies the access authority in accordance with an operation condition of the player, in accordance with the first embodiment of the present invention.
Fig. 9

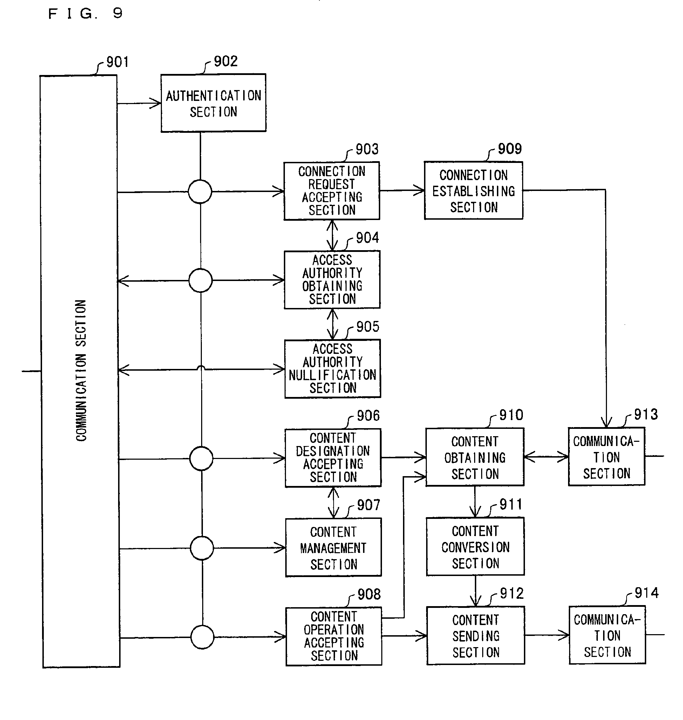

   Fig. 9 is a function block diagram illustrating an arrangement of a main part of the foreign gateway in accordance with one embodiment of the present invention.
Fig. 10

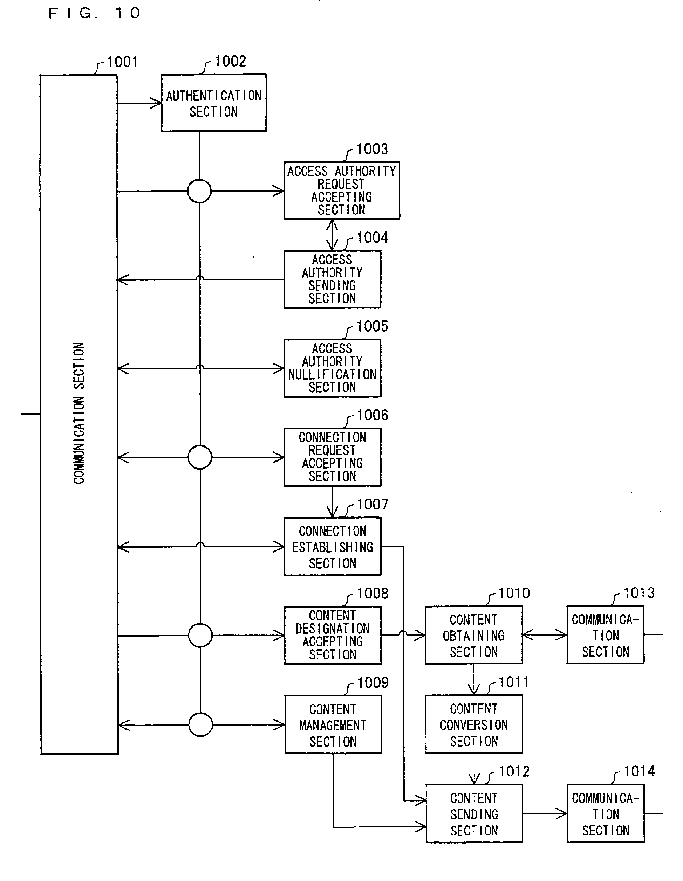

   Fig. 10 is a function block diagram illustrating an arrangement of a main part of the home gateway in accordance one the embodiment of the present invention.
Fig. 11

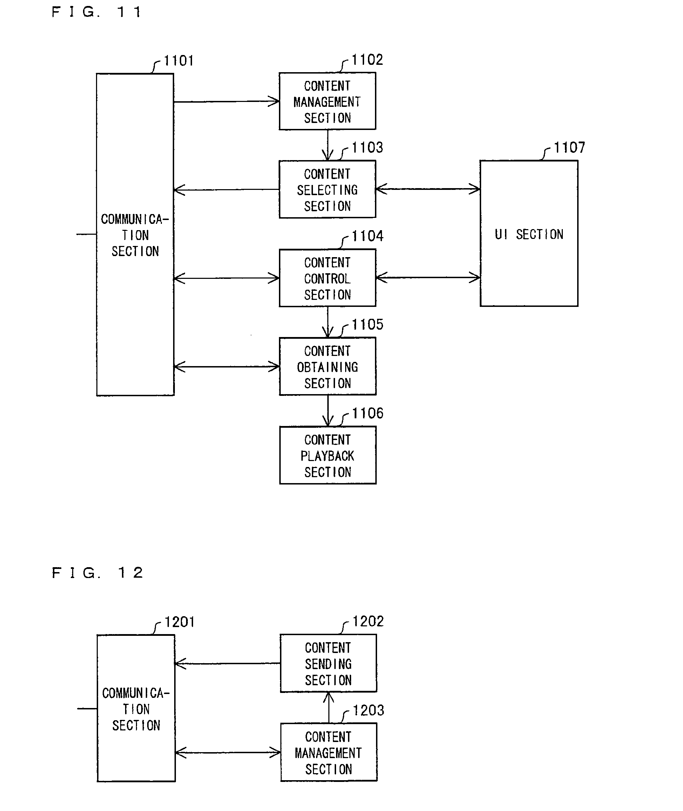

   Fig. 11 is a function block diagram illustrating an arrangement of a main part of the player in accordance with one embodiment of the present invention.
Fig. 12
   Fig. 12 is a function block diagram illustrating an arrangement of a main part of a media server in accordance with one embodiment of the present invention.
Fig. 13

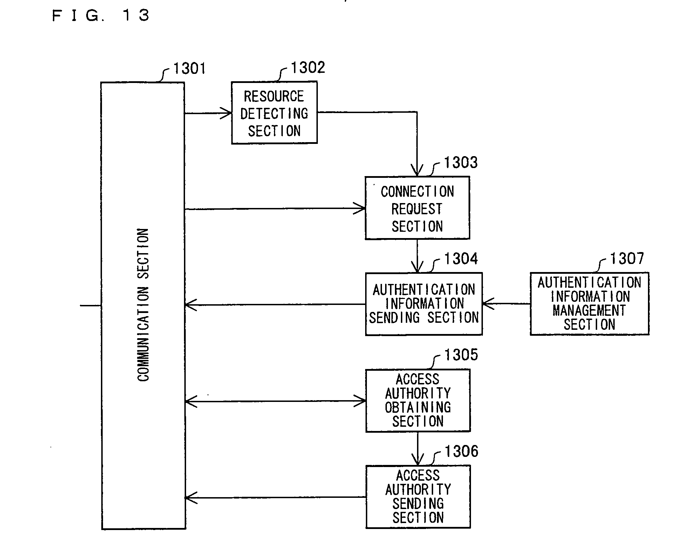

   Fig. 13 is a function block diagram illustrating an arrangement of a main part of the mobile terminal in accordance with one embodiment of the present invention.
Fig. 14

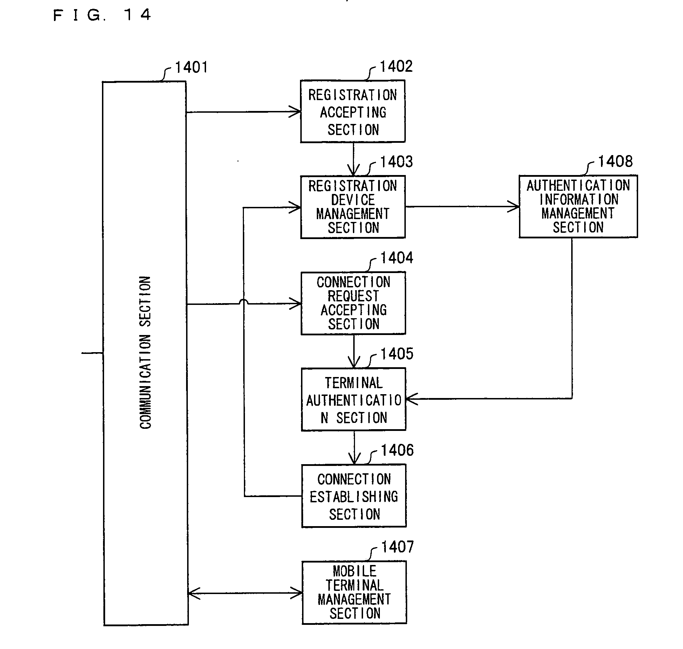

   Fig. 14 is a function block diagram illustrating an arrangement of a main part of a server provided by the service provider in accordance with one embodiment of the present invention.
Fig. 15

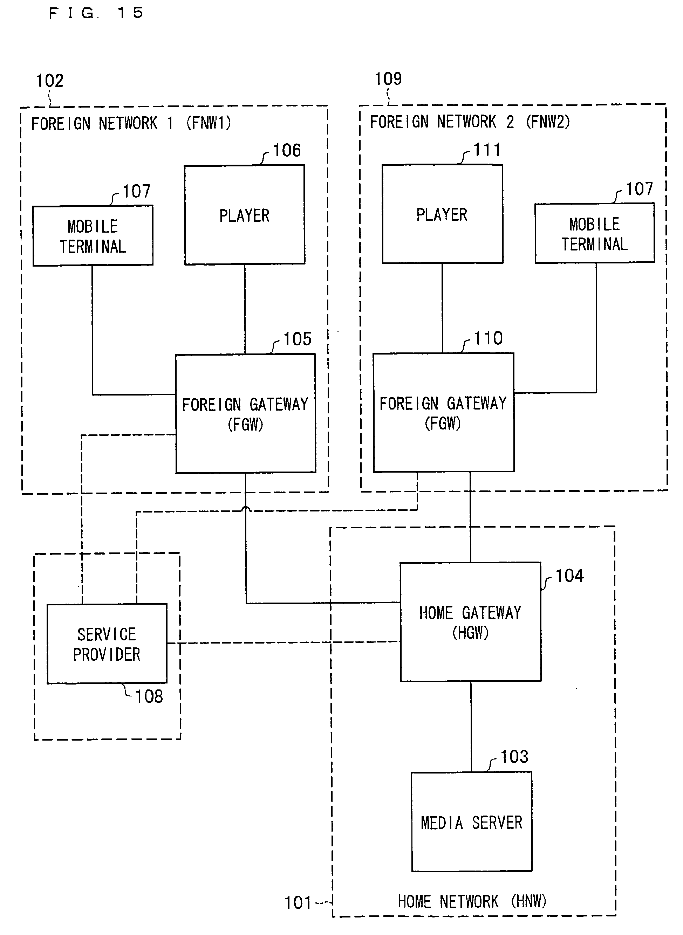

   Fig. 15 is a block diagram schematically illustrating a content delivery system in accordance with the second embodiment of the present invention.
Fig. 16

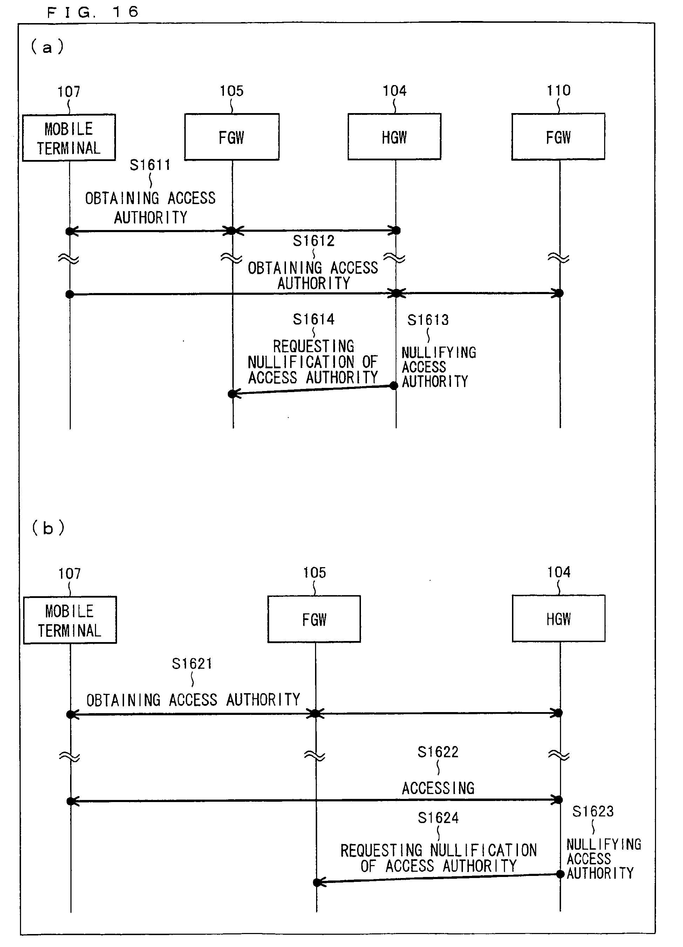

   Fig. 16 is a view illustrating a procedure in which the access authority is nullified, in accordance with the second embodiment of the present invention ((a) of Fig. 16 is a sequence diagram illustrating a procedure in which, when the foreign gateway is permitted to access the home gateway by the home gateway by use of the authentication information obtained via the mobile terminal, the access authority of another foreign gateway is nullified, which another foreign gateway is permitted to access the home gateway by the home gateway by use of the authentication information which has been already obtained via the mobile terminal, and (b) of Fig. 16 is a sequence diagram illustrating a procedure in which the mobile terminal directly accesses the home gateway via a public communication network so that the access authority of the foreign gateway is nullified).
Fig. 17
   Fig. 17 is a network block diagram of a conventional home network employing a DLNA, illustrating a conventional technique.
Fig. 18
   Fig. 18 is a sequence diagram of a conventional procedure for playing back content based on the DLNA, illustrating a conventional technique.
Fig. 19
   Fig. 19 is a system block diagram of a content delivery system in which it is possible to play back content stored in the home server, illustrating a conventional technique.

### Reference Signs List

101 HOME NETWORK
102 FOREIGN NETWORK
103 MEDIA SERVER
104 HOME GATEWAY (CONTENT PROVIDING SERVER)
105 FOREIGN GATEWAY (CONTENT DELIVERY SERVER)
106 PLAYER (CONTENT PLAYBACK DEVICE)
107 MOBILE TERMINAL (TERMINAL DEVICE)
108 SERVICE PROVIDER
110 FOREIGN GATEWAY (EXTERNAL CONTENT DELIVERY SERVER)
904 ACCESS AUTHORITY OBTAINING SECTION (AUTHENTICATION INFORAMTION OBTAINING MEANS, ACCESS AUTHORITY OBTAINING MEANS)
905 ACCESS AUTHORITY NULLIFICATION SECTION (ACCESS AUTHORITY NULLIFICATION MEANS)
907 CONTENT MANAGEMENT SECTION (PLAYBACK FUNCTION TERMINATION DETECTING MEANS, PLAYBACK CONDITION DETECTING MEANS, POWER-OFF DETECTING MEANS)
1005 ACCESS AUTHORITY NULLIFICATION SECTION (CONTENT DELIVERY SERVER ACCESS AUTHORITY NULLIFICATION MEANS)
1304 AUTHENTICATION INFORAMTION SENDING SECTION (CONTENT PROVIDING SERVER AUTHENTICATION INFORAMTION OBTAINING MEANS, CONTENT PROVIDING SERVER AUTHENTICATION INFORAMTION PROVIDING MEANS)

### Description of Embodiments

### [First Embodiment]

One embodiment of the present invention is described below with reference to Figs. 1 through 16.

First, the following explains an arrangement of a content delivery system including a gateway device in accordance with the present embodiment.

Fig. 1 is a block diagram schematically illustrating the content delivery system. The content delivery system includes a home network (hereinafter, referred to as "HNW") 101 constituted in a user's home, and a foreign network (hereinafter, referred to as "FNW") 102 constituted in a second place that the user visits. A home gateway (hereinafter, referred to as "HGW") 104 for managing devices in the HNW 101 is provided to the HNW 101, and a foreign gateway (hereinafter, referred to as "FGW") 105 for managing devices in the FNW 102 is provided to the FNW 102.

Here, the HNW 101 constituted in the user's home and the FNW 102 constituted in the second place are distinguished from each other for explanatory convenience. However, the names of the networks are merely relative names. That is, there are cases where roles of the home network and the foreign network are replaced with each other, and roles of the home gateway and the foreign gateway are replaced with each other. Therefore, in implementation of the system, both of the networks preferably have functions of both of the networks, and also both of the gateways preferably have functions of both of the gateways.

In the HNW 101, a media server 103 is provided. The media server 103 is constituted by, for example, a device (such as an HDD recorder or a PC) that includes a storage. The media server 103 stores various content, such as moving images, still images, sounds, and office documents. A device for delivering real-time media, such as a camera, is also a sort of the media server 103. Fig. 1 illustrates only one server for explanatory convenience, but there are usually a plurality of the media servers 103 in the HNW 101. Meanwhile, at least one HGW 104 must be provided in the HNW 101. However, there may be a plurality of the HGWs 104 in the HNW 101.

In the FNW 102, a player 106 is provided. The player 106 is constituted by, for example, a content playback device, such as a TV or audio equipment, and plays back a moving image, a still image, and a sound, or presents an office document. A player can deal with only a corresponding sort(s) of media. An audio device cannot play back a moving image, for example. Fig. 1 illustrates only one player for explanatory convenience, however, there are usually a plurality of the players 106 in the FNW 102. Meanwhile, at least one FGW 105 must be provided in the FNW 102. However, there may be a plurality of the FGWs 105 in the FNW 102.

Usually a single device realizes both home gateway functions and foreign gateway functions, so that it is unnecessary to provide the home gateway and the foreign gateway separately in each home (it is unnecessary to provide two devices for the functions in each home).

There is usually a player in the HNW 101, and there is usually a media server in the FNW 102. However, the home gateway and the foreign gateway are relatively distinguished from each other, as described above, so that such an arrangement is omitted here for explanatory convenience. In the HNW 101, each device is connected to each of the other devices via a wired or wireless home LAN, and recognizes presence of the other devices. Each of the devices in the FNW 102 is arranged in the same manner as described above.

Further, in the following explanations of the present embodiment, a content delivery server recited in Claims corresponds to the FGW 105, a content providing server recited in Claims corresponds to the HGW 104, a content playback device recited in Claims corresponds to the player 106, and a terminal device recited in Claims corresponds to the mobile terminal 107.

### (1. Establishment of Connection Between HGW and FGW)

Here, an owner of the HNW 101, who lives in a place in which the HNW 101 is constituted, moves to, with the mobile terminal 107, a second place in which the FNW 102 is constituted. The owner plans to view and listen to, on the player 106 that belongs to the FNW 102, the content stored in the media server 103 that belongs to the HNW 101.

Fig. 2 is a sequence diagram illustrating a procedure in which the FGW 105 is connected to the HGW 104 by use of authentication information obtained via the mobile terminal 107. The following explains the procedure for connecting the FGW 105 to the HGW 104 with reference to Fig. 2.

First, the mobile terminal 107 applies to the FGW 105 for permission of the use of a resource that belongs to the FNW 102 (S201). In the FNW 102, a policy on permission for use is set in advance. The FGW 105 follows the policy on permission for use (S 202), and gives the mobile terminal 107 the permission for use of the resource (S203). The policy on permission for use may be a policy that accepts all requests, or another policy that requests the owner of the FNW 102 to check every request. Alternatively, the policy may be a policy that requests a user to make a settlement for a charge by use of a credit card or the like. Here, as an example, the FNW 102 adopts such a policy that permission to use all the resources that belong to the FNW 102 is given only to the mobile terminal 107 that is physically provided in the vicinity of the FGW 105. As to a way to check whether or not the mobile terminal 107 is physically provided in the vicinity of the FGW 105, various ways can be used. The following is examples of the way.
(i) The permission for use is given, only if it is confirmed that the mobile terminal 107 and the FGW 105 are in physical contact with each other, for example, the mobile terminal 107 and the FGW 105 are connected to each other via a sufficiently-short cable.
(ii) The mobile terminal 107 and the FGW 105 communicate with each other via a proximity communication, such as an infrared communication, and only an application received via the proximity communication can be accepted (the permission for use is given only if the application is received via the proximity communication).
(iii) Only if, after a specific physical operation is directly carried out, the application is received within a specific predetermined period, the permission for use is given. Specifically, only if, after a button or the like, which is physically provided to the FGW 105, is pressed, the application for use is received within a sufficiently-short predetermined period, the application is accepted.
(iv) A passcode is displayed on a display panel of the FGW 105. Only if the passcode (which is needs to be confirmed in the vicinity of the display panel) is inputted, the permission for use is given. It should be noted that it is possible to send out the passcode to the vicinity of the FGW 105 via the proximity communication (a proximity wireless communication, for example).

In the present embodiment, the mobile terminal 107 and the FGW 105 communicates with each other via infrared radiation. By receiving a communication from the mobile terminal 107 via the infrared radiation, the FGW 105 checks whether or not the mobile terminal 107 is physically in the vicinity of the FGW 105. If it is confirmed that the mobile terminal 107 is physically in the vicinity of the FGW 105, the FGW 105 gives the mobile terminal 107 the permission for use of the resources that belong to the FGW 105. Thus, in a case where the FGW 105 is arranged to accept only the proximity communication to limit a mobile terminal that can communicate with the FGW, it is possible to omit the steps S201 through S203, which are surrounded by a dotted line in Fig. 2. This is because the FGW 105 is arranged to accept a notice of an address of the HGW 104, a communication ID, and a password via only the infrared communication so that it is automatically secured that the mobile terminal 107 that has sent said matters is physically in the vicinity of the FGW 105.

In the mobile terminal 107 carried by the owner of the HNW 101, authentication information (a client certificate for proving that the owner is the client of the HGW 104, and the password for logging in the HGW 104), which is necessary for the mobile terminal 107 to log in the HGW 104 via a network, is stored in advance. The mobile terminal 107 attempts to log in the HGW 104 via the network by using such authentication information (S204). In terms of the security, it is preferable to appropriately encrypt a communication pathway between the mobile terminal 107 and the HGW 104, so as to prevent another person from wiretapping data, or falsifying data.

The HGW 104 authenticates the mobile terminal 107 by confirming the client certificate of the mobile terminal 107, or by carrying out password authentication (S205). Then, the HGW 104 permits the mobile terminal 107 to log in the HGW 104 (S206). Next, the mobile terminal 107 requests the HGW 104 to create a password for connecting the FGW 105 to the HGW 104 (S207). The HGW 104 creates a password (S208), and sends the password thus created to the mobile terminal 107 (S209). It is preferable that the password has an expiration date, and cannot be used beyond the expiration date, that is, a one-time password (OTP).

The mobile terminal 107 notifies the FGW 105 of the address of the HGW 104 (destination), the communication ID, and the password via the proximity infrared communication (S210). The communication ID is set in advance between the mobile terminal 107 and the HGW 104 (alternatively, the communication ID is dynamically created based on a rule on which both the mobile terminal 107 and the HGW 104 agreed in advance). Even if the password is leaked outside in giving the password to the mobile terminal 107 in S209, no one can use the password without knowing the ID. This reduces risks of another person's use.

The FGW 105 sends a connection request to the HGW 104 by use of the address, the ID, and the password, each of which has been given from the mobile terminal 107 in S210 (S211). The HGW 104 establishes the connection between the HGW 104 and the FGW 105 if the HGW 104 confirms availability of the ID and the password without any problems. At this point, an SIP connection is set up between the FGW 105 and the HGW 104 via an SIP server provided by a service provider 108. The service provider 108 authenticates each gateway, or evaluates a safety level of each gateway, if necessary, and can provide information thus obtained to each gateway. By referring to the information provided from the service provider 108, each gateway can adopt such a safe way that only a gateway that is stored in a service in advance is permitted to have the connection, or a gateway having a low evaluation is not permitted to have the connection. It should be noted that the communication pathway between the HGW 104 and the FGW 105 is a pathway via which the content list or the content of the media server 103 managed by the HGW 104 is delivered in a subsequent stage, so that it is also preferable that the pathway is appropriately encrypted.

In order to establish the HGW-FGW communication securely, the mobile terminal 107 is preferably arranged to confirm a network address of the FGW 105 in S201 through S203, and to notify the HGW 104 of the network address of the FGW 105 in S207. At this point, it is possible to make the HGW-FGW communication more secure by arranging the HGW 104 to accept access from only the same address as the address that has been notified.

### (2. Content List Obtained by Player)

In order to play back the content stored in the media server 103 that belongs to the HNW 101, it is necessary to designate desired content. For this reason, it is necessary to obtain a list of a part of or all of the content stored in the media server 103, and then, select the desired content on the list.

Fig. 3 is a sequence diagram illustrating a procedure in which the player 106 obtains the content list. The player 106 requires the FGW 105 to obtain the content list (S301). The FGW received the request for the content list, and then transfers the request to the HGW 104 (S302). The HGW 104 checks the content managed by the media server 103 which is provided in a user's home (S303). Then, the HGW 104 sends the content list to the FGW 105 (S304). The FGW 105 receives the content list, and transfers it to the player 106 (S305).

Fig. 4 is an explanatory view illustrating an examples of a display screen which is displayed on the player 106 as a UI (User Interface) of the player 106.

The display screen 401 is presented such that the content list thus obtained is hierarchized by category. For example, if a user selects a folder 403, programs recorded on an HDD recorder are listed as a display screen 407 illustrated in Fig. 4.

Further, if the user selects a folder 404, pictures taken by a digital camera are listed. If the user selects a folder 405, movies taken by a video camera are listed. Furthermore, if the user selects a folder 406, music ripped from a CD, or bought via an online shop is listed. These folders are virtual folders, and a single file may be classified into a plurality of folders.

It should be noted that such sort folders are merely an example, and there may be various ways to classify the content. For example, the content may be classified by storage date, classified into old content and new content, classified by category, or classified by media server.

### (3. Playback of Content)

Fig. 5 illustrates a procedure in which desired content is selected from the content list that has been already obtained, and the selected content is played back.

The player 106 selects target content from the content list that has been obtained in advance (S501), and then, sends a delivery request for the selected content to the FGW 105 (S502). The FGW 105 requests the selected content from the HGW 104 (S503). The HGW 104 obtains the selected content from the media server 103 in the HNW 101 (S504), and provides the content to the FGW 105 (S505). The FGW 105 receives the content, and then, delivers the content to the player 106 (S506). The player 106 plays back the content received from the FGW 105 (S507). The communication between the FGW 105 and the player 106 is carried out by use of an ordinary DLNA protocol. In view of the player 106, the FGW 105 is the DMS.

The following explains the UI used in the mobile terminal 107 in each procedure illustrated in Fig. 5 with reference to Fig. 4 again.

A display screen 407 illustrated in Fig. 4 is an example of an arrangement of a display screen for displaying the content list on the player 106. A thumbnail 408 and a brief explanation 409 are displayed for each content on the display screen 407.

If the user selects any of the content, the selected content is to be played back. A playable format, a playable bit rate, or a playable screen size differs depending on a player for use, so that it is preferable for the HGW 104 or the FGW 105, both of which transfer the content, to carry out necessary content conversion. Further, on a pathway from the media server to the player (end terminal), it is necessary to carry out a QoS (Quality of Service) control in order to appropriately manage a band. This secures quality necessary for the service.

### (4. Nullification of Access Authority)

With the procedure described above, it becomes possible to play back, on the player 106 in the second place, the content of the media server 103 in a user's home. However, if the access authority continues to be available, there is a possibility that, after the owner leaves the second place, someone accesses the content stored in the owner's home in such a manner that the owner does not intend that the content is accessed. Further, there is a possibility that under a condition where the use of the content is limited to, for example, private use, a plurality of access to the content may be allowed at the same time. In order to prevent such situations, the access authority should be nullified at appropriate timing.

Here, the following explains the access authority. In a case where the player 106 in the second place plays back the content of the media server 103 in home, first, the player 106 sends a content playback request to the FGW 105. Then, the FGW 105 transfers the player 106's content playback request to the HGW 104. When the HGW 104 receives, from the player 106 in the second place via the FGW 105, a content request that requests the content on the media server 103, the HGW 104 obtains the content from the media server 103, and provides the content thus obtained to the FGW 105.

That is, in order to play back, on the player 106 in the second place, the content on the media server 103 in a user's home, it is necessary to permit, in the HGW 104, the HGW 104 to provide the content at the content request of the FGW 105. In other words, it is necessary to permit the access from the FGW 105 to the HGW 104 in the HGW 104. Further, in the FGW 105, it is also necessary to permit the FGW 105 to send the content request from the player 106 to the HGW 104. In other words, it is necessary to permit, in the FGW 105, the access from the FGW 105 to the HGW 104. The nullification of the access authority is carried out to prevent permission of the access to the HGW 104.

The following specifically explains how to control the access to the HGW 104.

The FGW 105 has information (access request transfer possible/impossible information) that indicates whether or not the FGW 105 permits the devices managed by the FGW 105 to access the HGW 104. Then, when receiving, from the player 106, the content playback request with respect to the media server 103, the FGW 105 determines whether or not the FGW 105 permits the access, in accordance with the access request transfer possible/impossible information.

On the other hand, the HGW 104 has information (access possible/impossible information) that indicates whether or not the HGW 104 permits the devices authenticated by the HGW 104 to access the HGW 104. Then, when receiving, from the player 106 in the second place via the FGW 105, the content request that requests the content on the media server 103, the HGW 104 determines whether or not the HGW 104 permits the access, in accordance with the access possible/impossible information.

Accordingly, it becomes possible to nullify an access authority by arranging the access request transfer possible/impossible information and the access possible/impossible information to indicate that the access to the HGW 104 is not permitted.

The following specifically explains processing for, in the HGW 104, permitting the access from the FGW 105 to the HGW 104. The FGW 105 obtains the address of the HGW 104, the connection ID, and the password created by the HGW 104. The FGW 105 sends the connection request to the HGW 104 based on the address of the HGW 104 thus obtained, and presents the connection ID and the password with respect to the HGW 104. At this time, the HGW 104 checks the connection ID and the password thus presented, so as to carry out authentication by checking whether or not the FGW 105 has authority to access the HGW 104.

As a result of the authentication, if it is confirmed that the FGW 105 has the authority to access the HGW 104, the access from the FGW 105 to the HGW 104 is permitted in the HGW 104. At this point, the HGW 104 associates data indicating that the access from the FGW 105 to the HGW 104 is permitted, with the information identifying the FGW 105, and stores the data as the access possible/impossible information.

The access possible/impossible information is not particularly limited. The access possible/impossible information may be set to indicate whether or not each device that has been confirmed as having the access authority in the authentication is being permitted to access the HGW 104, or may store a list regarding only devices that are permitted to access the HGW 104. Further, the HGW 104 does not necessarily have the access possible/impossible information. It is possible to have an arrangement in which another device may have the access possible/impossible information, and the access possible/impossible information may be read from the device. The arrangement is not particularly limited.

First, a demonstrative log off operation is carried out by operating the mobile terminal 107 so that the access authority is nullified. Here, two patterns are described below as a procedure for nullifying the access authority by the log off operation. Basically, this procedure follows the procedure performed for the log in.
(a) of Fig. 6 illustrates a procedure for nullifying the access authority of the foreign gateway at the request of the mobile terminal. (a) of Fig. 6 illustrates a nullification procedure in a case where it is possible to use a two-way communication pathway, such as WiFi (Wireless Fidelity), between the mobile terminal 107 and the FGW 105, or a one-way communication pathway, such as an infrared communication, from the mobile terminal 107 to the FGW 105. The mobile terminal 107 sends a log off request to the FGW 105 (S611).

The FGW 105 manages which mobile terminal logged in, that is, which mobile terminal was used when the HGW 104 authenticated the FGW 105. The FGW 105 nullifies the access authority with respect to the HGW 104 when receiving the log off request from the mobile terminal (S612).

The following explains the nullification of the access authority in S612 more specifically. As described above, the FGW 105 has the access request transfer possible/impossible information indicating whether or not the FGW 105 permits the devices managed by the FGW 105 to access the HGW 104. That is, in S612, the access request transfer possible/impossible information is set to indicate that the devices managed by the FGW 105 are not permitted to send the access request to the HGW 104.

For this reason, the FGW 105 does not permit the access from the player 106 to the HGW 104 in accordance with the access request transfer possible/impossible information when receiving the access request from the player 106 to the HGW 104. However, in a case where there is another media server, in which content is stored, on the FNW 102 to which the FGW 105 belongs, it is possible for the player 106 to access the media server via the FGW 105.

Further, the FGW 105 sends an access authority nullification request to the HGW 104 (S613). The HGW 104 receives the access authority nullification request, and forbids the access from the FGW 105 to the HGW 104 from then on, that is, the access authority is nullified (S614).

The access authority nullification request in S613 is data that requests the access from the FGW 105 to the HGW 104 not to be permitted. In the example illustrated in (a) of Fig. 6, the FGW 105 itself sends the access authority nullification request to the HGW 104. The following explains the nullification of the access authority in S614 more specifically. As described above, the HGW 104 has the access possible/impossible information indicating whether or not the HGW 104 permits the access from the FGW 105. When receiving the access authority nullification request, the HGW 104 sets the access possible/impossible information in S614 such that the access from the FGW 105 to the HGW 104 is not permitted. This causes the HGW 104 not to provide the content at the content request of the FGW 105.
(b) of Fig. 6 illustrates a procedure in which the access authority is nullified with the use of the mobile terminal 107 via a service provider 108. The mobile terminal 107 sends the log off request to the service provider 108 via the Internet or a mobile network (S621). The service provider 108, which has received the log off request, manages which gateways are associated with each other by the mobile terminal 107 that has sent the log off request. In other words, the service provider 108 manages which gateway is permitted to access, and which gateway permits the access. Therefore, it is possible for the service provider 108 to request each of the gateways to nullify the access authority.

The service provider 108 sends the access authority nullification request to the FGW 105 (S622). The FGW 105 receives the access authority nullification request, and then, nullifies the access authority of the FGW 105 with respect to the HGW 104 (S624). The nullification of the access authority in S624 is the same as the nullification of the access authority in S612.

In the same manner, the service provider 108 sends the access authority nullification request to the HGW 104 (S623). The HGW 104 receives the access authority nullification request, and then, nullifies the access authority of the FGW 105 with respect to the HGW 104 (S625). The nullification of the access authority in S625 is the same as the nullification of the access authority in S614.

In the arrangement of this example, the mobile terminal 107 and the FGW 105 can be away from each other, so that it is possible to log off even after the user leaves the second place.

Further, there may be another arrangement in which the access authority can be automatically nullified depending on whether or not the FGW 105 can recognize there is the mobile terminal 107, that is, depending on whether or not the FGW 105 can recognize the presence of the mobile terminal 107. This makes it possible to carry out the nullification of the access authority at appropriate timing even if the user forgets to perform the log off operation. The following explains an arrangement in which the nullification of the access authority is automatically carried out depending on the presence or absence of the mobile terminal 107.

As a procedure for automatically nullifying the access authority depending on the presence or absence of the mobile terminal 107, there may be various procedures depending on an available network environment. Here, two patterns of the procedure are described below.
(a) of Fig. 7 is a flow chart illustrating a flow of processing for nullifying the access authority of the FGW 105 depending on the presence or absence of the mobile terminal 107, in a case where it is possible to use the two-way communication pathway, such as WiFi, between the mobile terminal 107 and the FGW 105.
   First, the FGW 105 determines whether or not a predetermined condition is satisfied (S711). Here, the predetermined condition may be a condition that "a period set in advance elapsed", "a period set in the authentication of the mobile terminal 107 elapsed", or "the access from the player 106 to the content stored in a user's home is suspended". In a case where the predetermined condition described above is satisfied in S711, the FGW 105 starts processing for checking the presence or absence of the mobile terminal 107. That is, S711 is a trigger for the FGW 105 to start the processing for checking the presence or absence of the mobile terminal 107.
   As the processing for checking the presence or absence of the mobile terminal 107, first, the FGW 105 sends a presence confirmation message to the mobile terminal 107 (S712). As the presence confirmation message, for example, a ping message of ICMP (Internet Control Message Protocol) may be used. Then, the FGW 105 determines whether or not the mobile terminal 107 replies to the presence confirmation message thus sent (S713). The FGW 105 can identify the mobile terminal 107 by use of a MAC (Media Access Control) address, an intrinsic number recorded on a mobile phone's SIM (Subscriber Identity Module) card, or the like.
   If the mobile terminal 107 replies to the message in S713, the processing goes back to S711. That is, the presence of the mobile terminal 107 is confirmed, so that it is unnecessary to nullify the access authority. Therefore, a current condition continues until the predetermined condition is satisfied again. If the mobile terminal 107 does not reply to the message, the access authority is nullified since the mobile terminal 107 is absent (S714).
   The details of the nullification of the access authority in S714 are the same as the nullification of the access authority in S612. Then, the FGW 105 sends the access nullification request as in S613, and the nullification of the access authority is carried out in the HGW 104 as in S614.
(b) of Fig. 7 is a sequence diagram illustrating a procedure in which the access authority of the FGW 105 is nullified via the service provider 108, depending on a change in position of the mobile terminal 107. (b) of Fig. 7 illustrates the nullification procedure in a case where the service provider 108 is used.

In the example illustrated in (b) of Fig. 7, in a case where the mobile terminal 107 is moved, the mobile terminal 107 sends information regarding a change in position of the mobile terminal 107 to the service provider 108 via the Internet, a mobile network, or the like (S721). Here, the information regarding a change in position of the mobile terminal 107 (hereinafter, referred to as position information) includes "handover information", "GPS information", and the like.

The following explains the procedure for nullifying the access authority more specifically. First, the FGW 105 determines whether or not the predetermined condition is satisfied (S722). The predetermined condition is the same as the predetermined condition explained above with reference to (a) of Fig. 7, so that the explanations of the predetermined condition are omitted here.

In S722, if the predetermined condition is satisfied, the FGW 105 refers to the service provider 108 for the position information of the mobile terminal 107 (S723). When receiving the inquiry from the FGW 105, the service provider 108 sends the position information of the mobile terminal 107 to the FGW 105 (S724).

When receiving the position information of the mobile terminal 107 from the service provider 108, the FGW 105 determines whether or not the mobile terminal 107 was moved, based on the information thus received (S725). As described above, the position information includes "handover information", "GPS (Global Positioning System) information" and the like. Therefore, based on the position information, the FGW 105 carries out processing for checking whether or not "the mobile terminal 107 had a handover after being authenticated", "the GPS information obtained in the authentication differs from the current GPS information", or the like. Thus, the FGW 105 determines whether or not the mobile terminal 107 was moved. In S725, if the FGW 105 determines that the mobile terminal 107 was moved, the FGW 105 nullifies the access authority (S726).

The details of the nullification of the access authority in S726 are the same as the nullification of the access authority in S612 described above. Then, the FGW 105 sends the access authority nullification request as in S613 described above, and the access authority is nullified in the HGW 104 as in S614 described above.

It is possible to have another arrangement for automatically nullifying the access authority, in which an available period of the access authority is set to the FGW 105. However, if the same available period is set for any situation, there is a possibility that significant inconvenience is caused depending on use conditions. For example, if the available period is set one hour for any situation, even a few-minute access for referring to the content stored in a user's home causes the networks to continue to be connected for a while. On the other hand, there is another possibility that during a playback of a two-hour program, the content is stopped at the time one hour elapsed, even in the middle of the content, for example. For this reason, the user is allowed to set the available period on the mobile terminal 107 in advance, and send the available period with a password in the connection establishment procedure S210 illustrated in Fig. 2. This arrangement makes it possible to set the available period in accordance with a situation when the networks get connected to each other.

Further, other than the arrangement in which the user sets the available period in advance, it is also possible to have an arrangement in which the available period is automatically set in the FGW 105. The following description deals with the arrangement in which the available period is automatically set in the FGW 105.

As described above, there may be the arrangement in which the access authority is nullified depending on the presence or absence of the mobile terminal 107. However, there is a possible situation where the FGW 107 does not have a function of checking the presence of the mobile terminal 107, so that it is impossible to check the presence or absence of the mobile terminal 107, or another possible situation where the presence of the mobile terminal 107 is confirmed, but the player 106 no longer accesses the media server 103 provided in a user's home. In consideration of such situations, there may be an arrangement in which the access authority is nullified depending on not only the presence or absence of the mobile terminal 107, but also a condition of the access with respect to the user's home. That is, all the access of the player 106 with respect to the media server 103 provided in the user's home is performed via the FGW 105, so that the FGW 105 recognizes an operation condition of the player 106 in detail. Thereby, the FGW 105 can nullify the access authority depending on the operation condition of the player 106.

Fig. 8 illustrates a flow of the processing for nullifying the access authority in a case of an arrangement in which an available period is set so that the FGW 105 nullifies the access authority depending on the operation condition of the player 106. The same available period may be set for any situation, however, it is possible to set different available periods in accordance with the access condition.

In the example illustrated in Fig. 8, first, the FGW 105 carries out determination processing for recognizing the operation condition of the player 106, that is, a playback condition of the content. Depending on the operation condition recognized in the determination processing, the FGW 105 carries out processing for setting a period during which the access authority is available, that is, the available period of the access authority.

For example, the FGW 105 determines whether or not the player 106 has obtained the content list (S801). If the FGW 105 determines that the player 106 has obtained the content list, the FGW 105 sets an available period A (S805). After obtaining the content list, the player 106 highly possibly accesses the content. Therefore, it is preferable to set a certain period followed by the nullification relatively long. Accordingly, the available period A is set relatively long.

Further, the FGW 105 determines whether or not the player 106 temporarily stopped accessing the content in the middle of the content (S802). If the FGW 105 determines that the player 106 temporarily stopped accessing the content in the middle of the content, the FGW 105 sets an available period B (S806). In the case where the player 106 temporarily stops accessing the content in the middle of the content, there is a possibility that the player 106 restarts playing back the content from the middle of the content. Therefore, it is preferable to set a certain period followed by the nullification relatively long. Accordingly, the available period B is set relatively long.

Further, the FGW 105 determines whether or not the player 106 has finished accessing the content to the end of the content (S803). If the FGW 105 determines that the player 106 has finished accessing the content to the end of the content, the FGW 105 sets an available period C (S807). The available period C is set relatively short.

Furthermore, the FGW 105 determines whether or not the player 106 has finished accessing all the content that are open on the media server 103 (S804). If the FGW 105 determines that the player 106 has finished accessing all the open content, the FGW 105 sets an available period D (S808). In the case where the player 106 has finished accessing all the open content, it is highly possible that there is little need for the player 106 to access the content. Accordingly, the available period D is set very short so that the nullification processing is immediately started.

After setting the available period in S805 through S808, the FGW 105 determines whether or not the available period has expired (S809). At this point, if the FGW 105 determines that the available period has expired, the FGW 105 nullifies the access authority (S811).

Details of the nullification of the access authority in S811 are the same as the nullification of the access authority in S612 described above. Then, the FGW 105 sends the access authority nullification request as in S613 described above, after that, the access authority is nullified in the HGW 104 as in S614 described above.

Meanwhile, if the FGW 105 determines that the available period has not expired, the FGW 105 determines whether or not the player 106 is accessing the media server 103 (S810).

If, in S810, the FGW 105 determines that the player 106 is accessing the media server 103, the FGW 105 clears the available periods thus set (S813). After that, the FGW 105 returns to the processing for recognizing the operation condition of the player 106 again. On the other hand, if, in S810, the FGW 105 determines that the player 106 is not accessing the media server 103, the FGW 105 returns to the processing for determining whether or not the available periods has expired in S809.

Further, as the operation condition of the player 106, the FGW 105 also determines whether or not the player 106 has finished its operation (S812). At this point, if the FGW 105 determines that the player 106 has finished its operation, the FGW 105 immediately starts the nullification processing as in the case where the available periods has expired (S811).

As a condition where the player 106 finishes its operation, the player 106 may be turned off. Alternatively, only an application having a function of the player 106 may be finished. Further, if a TV has the function of the player 106, and the function of the player 106 is switched over to another function, for example, another channel or another input, the player 106 finishes its operation.

The same method as the method for checking the presence or absence of the mobile terminal 107 can be used in order that the FGW 105 checks whether or not the player 106 has finished its operation. Moreover, in the DLNA, the checking can be carried out by using an event subscription method.

The following description deals with the event subscription method more specifically. In the DLNA, the player 106 can register for an event subscription if the player 106 finds the FGW 105, which is to be a server. When finishing its operation, the player 106 gives the FGW 105 a notice of cancellation of the event subscription. The FGW 105 can recognize the player 106 has finished its operation by receiving the cancellation message. Thereby, on the basis of the recognition, it becomes possible for the FGW 105 to nullify the access authority.

Further, there is a possibility that there are plurality of players, including the player 106, in the FNW 102, and a plurality of the players simultaneously try to access the HGW 104 via the FGW 105. However, in the arrangement, only one player can access the HGW 104 at a time.

It should be noted that priorities are provided to, respectively, the nullification procedures described above. For example, even when the player 106 is accessing the media server 103, the access authority is forcefully nullified if the absence of the mobile terminal 107 is confirmed, or the available period set in the authentication has expired. Even if the available period has not expired, the access authority is forcefully nullified in a case where a demonstrative log off operation is carried out on the mobile terminal 107.

Further, other than the arrangement described above, in which the FGW 105 nullifies the access authority by detecting the playback condition or a termination of the playback function, it is also possible to have an arrangement in which the FGW 105 nullifies the access authority by detecting power-off of the player 106. That is, the FGW 105 and the player 106 are connected to the same network, so that the FGW 105 nullifies the access authority described above when the FGW 105 cannot communicate with the player 106, or when the FGW 105 detects the power-off of the player 106 by receiving, from the player 106, a signal indicating demonstrative power-off.

Further, in the arrangement of the present embodiment, the FGW 105 and the player 106 are provided independently. However, the present invention is not limited to this, and the FGW 105 may include the player 106.

### (5. Arrangement of Each Device)

Next, the following explains the arrangement of each device which realizes the processing illustrated in Figs. 2, 3, and 5, with reference to Figs. 9 through 14.

Fig. 9 is a function block diagram illustrating an arrangement of a main part of the FGW 105.

As illustrated in Fig. 9, the FGW 105 includes the following constituents.
- Communication sections 901, 913, and 914, each of which is a communication interface with respect to various external devices.
- An authentication section 902 which manages communications that performs authentication processing.
- A connection request accepting section 903 which accepts a connection request (application for use) (S201) from the mobile terminal 107.
- An access authority obtaining section (authentication information obtaining means, access authority obtaining means) 904 which obtains, from the mobile terminal 107, an address (content providing server identifying information) for uniquely designating the HGW 104, which is to be a connection destination, and a connection ID and a password (authentication information), for establishing a connection pathway authenticated between the FGW 105 and the HGW 104 (S210).
- A connection establishing section 909 which sends the connection ID and the password, which have been obtained by the access authority obtaining section 904, to the HGW 104, which has been designated by the address obtained by the access authority obtaining section 904 as well (S211), so as to establish the authenticated communication pathway (S213)
- A content management section 907 which (i) obtains, from the player 106, a content list request that requests the content list (S301), (ii) transfers the content list request thus obtained to the HGW 104 via the connection pathway established by the connection establishing section 909 (S302), and also (iii) transfers the content list obtained from the HGW 104, as a reply to the content list request, to the player 106 (S305).
- An access authority nullification section (access authority nullification means) 905 which nullifies, in accordance with the operation condition of the mobile terminal 107 or the operation condition of the player 106, the access authority that has become available on the establishment of the connection between the FGW 105 and the HGW 104.
- A content designation accepting section (content designation information obtaining means) 906 which obtains, from the player 106, content designation information for designating, from among content included in the content list, content that is to be played back (S502).
- A content obtaining section (content obtaining means) 910 which requests, from the HGW 104, the delivery of the content designated by the content designation information from among content managed by the HGW 104 (S503), and obtains the content delivered by the HGW 104 via the connection pathway established by the connection establishing section (S505).
- A content conversion section 911 which, in accordance with the function of the player 106, converts the content obtained by the content obtaining section 910.
- A content sending section (content delivery means) 912 which sends the player 106 the content that is obtained by the content obtaining section 910, and then, if necessary, is converted by the content conversion section 911 (S506).
- A content operation accepting section 908 which accepts a user operation instructing a playback, a fast-forward, a fast-rewind, or a pause of the content, and controls the content sending section 912 and the content obtaining section 910 in accordance with the user operation thus accepted.

The FGW 105 is connected to a network via the connection sections 901, 911, and 914. In a case where the FGW 105 communicates with outside the FNW 102, such as the mobile terminal 107 or the HGW 104, the connection is established via the authentication section 902. If the connection request accepting section 903 accepts the connection request from the mobile terminal 107, the access authority obtaining section 904 receives information such as the address, the ID, and the password, which are necessary for the FGW 105 to be connected to the HGW 104, from the mobile terminal 107. Then, on the basis of the information thus obtained, the connection establishing section 909 establishes the connection between the FGW 105 and the HGW 104.

The content management section (playback function termination detecting means, playback condition detecting means, power-off detecting means) 907 obtains the content list from the HGW 104, and provides the content list to the player 106 in accordance with the request from the player 106. If the content designation accepting section 906 accepts the content request from the player 106, the content obtaining section 910 obtains the content thus requested on the basis of the connection established between the FGW 105 and the HGW 104 by the connection establishing section 909. Further, in a case where any content playback operation is received from the player 106 during the playback of the content, the content management section 907 causes the content sending section 912 or the content obtaining section 910 to respond to the playback operation, such as the fast-forward or fast-rewind of the content. Therefore, the content management section 907 can detect the playback condition of the content or the playback function termination. Furthermore, the content management section 907 can detect the power-off of the player 106 in a case where the FGW 105 cannot communicate with the player 106. Alternatively, the content management section 907 may be arranged to detect the power-off of the player 106 by receiving a signal indicating the power-off from the player 106. However, the present invention is not particularly limited to such arrangements of the content management section 907.

Fig. 10 is a function block diagram illustrating an arrangement of a main part of the HGW 104.

As illustrated in Fig. 10, the HGW 104 includes the following constituents.
- Communication sections 1001, 1013, and 1014, each of which is a communication interface with respect to various external devices.
- An access authority request accepting section 1003 which accepts, from the mobile terminal 107, the access authority request that requests the password that is used to establish the communication pathway authenticated between the FGW 105 and the HGW 104 (S207)
- An access authority sending section 1004 (authentication information sending means) which sends the mobile terminal 107 the password (one-time password, for example) (S209) created by a password creating section (not illustrated) (S208).
- An access authority nullification section 1005 (content delivery server access authority nullification means) which nullifies the access authority of the FGW that has been on the establishment of the connection, in accordance with an access condition of a device different from the FGW that has been already on the establishment of the connection.
- A connection request accepting section 1006 which accepts the connection request including the ID and the password from the FGW 105 (S211).
- An authentication section 1002 which checks whether or not the password accepted by the connection request accepting section 1006 is an available password created by the password creating section (S212).
- A connection establishing section 1007 (communication pathway establishing means) which establishes the communication pathway between the FGW 105 and the HGW 104 in a case where the authentication section 1002 confirms the availability of the password accepted by the connection request accepting section 1006 (S213).
- A content management section 1009 which (i) receives the content list request via the communication pathway established by the connection establishing section 1007 (S302), (ii) creating a list of content managed by the HGW 104 (S303), and (iii) sends the content list thus created to the FGW 105 via the communication pathway established by the connection establishing section 1007 (S304).
- A content designation accepting section 1008 which accepts, from the FGW 105 via the communication pathway established by the connection establishing section 1007, a content delivery request including the content designation information for designating the content selected by a user in the player 106 from among the content which belongs to the content list (S503).
- A content obtaining section 1010 which obtains, from the media server 103, the content designated by the content designation information included in the content delivery request (S504).
- A content conversion section 1011 which, with respect to the content obtained from the media server 103, carries out content conversion that is necessary to send the content to the FGW 105.
- A content sending section 1012 (content delivery means) which sends the FGW 105 the content converted by the content conversion section 1011, as appropriate, via the communication pathway established by the connection establishing section 1007 (S505).

The HGW 104 is connected to a network via the communication section 1001. In a case where the HGW 104 communicates outside the HNW 101, such as the mobile terminal 107 or the FGW 105, the connection is established via the authentication section 1002. If the access authority request accepting section 1003 accepts the access authority request from the mobile terminal 107, the access authority request accepting section 1003 creates a password. Then, the access authority sending section 1004 sends the password to the mobile terminal 107.

If the connection request accepting section 1006 accepts the connection request from the FGW 105, the connection establishing section 1007 establishes the connection between the HGW 104 and the FGW 105 (the authentication section 1002 checks whether or not the password is an available password sent by the access authority sending section 1004). The content management section 1009 sends the content list based on the request from the FGW 105. If the content designation accepting section 1008 accepts the content deliver request, the content obtaining section 1010 communicates with the media server 103 via the communication section 1013 so as to obtain the content thus requested. After the content conversion section 1011 carries out the content conversion that is necessary for the sending, the content sending section 1012 sends the content via the communication section 1014.

Fig. 11 is a function block diagram illustrating an arrangement of a main part of the player 106.

As illustrated in Fig. 11, the player 106 includes the following constituents.
- A communication section 1101 which is a communication interface for communicating with other devices in the FNW 102, and a content management section 1102 which sends the FGW 105 the content list request that requests the content list (S301), and receives, from the FGW 105, the content list obtained by the FGW 105 from the HGW 104 (S305).
- A content selecting section 1103 which identifies, on the basis of the user operation detected by a UI section 1107, the content that is to be played back, and sends the FGW 105 the content designation information for designating the content that is to be played back (S502).
- A content control section 1104 which controls the playback of the content based on the user operation detected by the UI section 1107.
- A content obtaining section 1105 (content obtaining means) which receives the delivery of the content managed by the HGW 104 (S506), and a content playback section 1106 (content playback means) which plays back the content obtained by the content obtaining section 1105 (S507).

The content management section 1102 obtains the content list from the HGW 104 via a network. The content selecting section 1103, which is connected to the UI section 1107, selects and plays back the content. The content control section 1104 carries out various playback operations via the UI section 1107.

Fig. 12 is a function block diagram illustrating an arrangement of a main part of the media server 103.

As illustrated in Fig. 12, the media server 103 includes: a communication section 1201 which is a communication interface for communicating with other devices in the HNW 101; a content management section 1203 which sends the HGW 104 a list of the content managed by the media server 103; and a content sending section 1202 which sends the content to the HGW 104.

Fig. 13 is a function block diagram illustrating an arrangement of a main part of the mobile terminal 107.

As illustrated in Fig. 13, the mobile terminal 107 includes the following constituents.
- A communication section 1301 which is a communication interface with respect to various external devices.
- A resource detecting section 1302 which detects a gateway device in the FNW 102.
- A connection request section 1303 which sends the FGW 105, which is detected by the resource detecting section 1302, an application for use, so as to carry out the connection request (S201).
- An authentication information management section 1307 which manages the authentication information that is necessary for the mobile terminal 107 to be connected to the FGW 105, and the authentication information that is necessary for the mobile terminal 107 to log in the HGW 104 (S204).
- An authentication information sending section 1304 (content providing server authentication information obtaining means, content providing server authentication information providing means) which obtains, from the authentication information management section 1307, the authentication information that is necessary for the mobile terminal 107 to be connected to the FGW 105, and sends the authentication information to the FGW 105 (S201), and obtains, from the authentication information management section 1307, the authentication information that is necessary for the mobile terminal 107 to log in the HGW 104, and sends the authentication information to the HGW 104 (S204).
- An access authority obtaining section 1305 (authentication information obtaining means) which requests a password (authentication information), which is necessary for establishing the communication pathway authenticated between the FGW 105 and the HGW 104, from the HGW 104 (S207), and obtains the password created by the HGW 104 (S209).
- An access authority sending section 1306 (authentication information sending means) which sends the FGW 105 the password (authentication information) obtained by the access authority obtaining section 1305, and the connection ID (authentication information) and the address (external gateway designation information) for designating the HGW 104, both of which are stored in a storage section (not illustrated) in advance (S210).

The mobile terminal 107 communicates with other devices via the communication section 1301. The communication section 1301 is often constituted by a plurality of networks, such as the Internet and a mobile network. The mobile terminal 107 enters the FNW, and the resource detecting section 1302 finds the FGW 105 in the network. Then, the connection request section 1303 carries out connection request with respect to the FGW 105. At this point, the authentication information management section 1307 sends necessary authentication information via the authentication information sending section 1304.

Meanwhile, the mobile terminal 107 carries out connection processing with respect to the HGW via the communication section 1301, as well (the authentication processing is the same as described above). The access authority obtaining section 1305 obtains, from the HGW 104, the access authority, which is necessary for the FGW 105 to access the HGW 104. Then, the access authority sending section 1306 sends the access authority to the FGW 105.

Fig. 14 is a function block diagram illustrating an arrangement of a main part of a server provided by the service provider 108. The server has an SIP server function, and includes: a communication section 1401; a registration accepting section 1402; a registration device management section 1403; a connection request accepting section 1404; a terminal authentication section 1405; a connection establishing section 1406; an authentication information management section 1408; and a mobile terminal management section 1407, which accepts a log off request from the mobile terminal, or accepts an inquiry regarding a condition of the mobile terminal.

Here, since the SIP is used to establish a session between the HGW and the FGW, an SIP server is necessary. However, the communication pathway between the HGW and the FGW can be realized by other means, such as a direct connection. In such a case, the SIP server is unnecessary.

### [Second Embodiment]

In the first embodiment, the access authority is nullified depending on the condition of the device in the FGN102, such as the mobile terminal 107 or the player 106. Meanwhile, there may be a case where the FGW 105 does not nullify the access authority depending on the condition of the mobile terminal 107 or the player 106, but the access authority is indirectly nullified depending on a condition of the HGW 104. The present embodiment deals with the following two patterns.

Fig. 15 is a block diagram schematically illustrating a content delivery system constituted by a user's home, a second place, and further, a third place. With the arrangement, there is a possibility that a user uses the mobile terminal 107 in the foreign network 102 (FNW1) so as to access the content stored in the media server 103 on the home network 101 (HNW) from the player 106, and then moves to a foreign network 109 (FNW2), which is different from the FNW1, while carrying the mobile terminal 107. After that, the user accesses, from a player 111, the media server 103 on the home network 101 (HNW) via an FGW 110 (external content delivery server). In this case, if the access authority of the player 106 provided in the FNW 102 is not nullified, there will be an unfavorable situation where it is possible to simultaneously access the home network 101 (HNW) from two different places.

The following description deals with a nullification procedure for avoiding this situation. (a) of Fig. 16 is a sequence diagram illustrating a procedure for nullifying the access authority of the FGW 105 that has been already permitted to access the HGW 104 by the HGW 104 by use of the authentication information obtained via the mobile terminal 107, when the FGW 110 is permitted to access the HGW 104 by the HGW 104 by use of the authentication information obtained via the mobile terminal 107.

First, the FGW 105 is permitted to access the HGW 104 by the HGW 104 by use of the authentication information obtained via the mobile terminal 107. In other words, the FGW 105 obtains the access authority with respect to the HGW 104 (S1611).

After that, the user who carries the mobile terminal 107 moves from the FNW 102, to which the FGW 105 belongs, to the FNW 109 to which the FGW 110 belongs. Then, the FGW 110 is permitted to access the HGW 104 by the HGW 104 by use of the authentication information obtained via the mobile terminal 107. In other words, the FGW 110 obtains the access authority with respect to the HGW 104 (S1612).

At this time, the HGW 104 nullifies the access authority of the FGW 105 (S1613). The nullification of the access authority in S 1613 is the same as the nullification of the access authority in S614 explained in the first embodiment. In this case, the FGW 105 detects, via the HGW 104, that the FGW 110 obtains the access authority. Then, the FGW 105 starts the processing for nullifying its access authority. This nullification of the access authority is not particularly limited. For example, it is possible to arrange such that the FGW 110 requests the HGW 104 to nullify the FGW 105's access authority with respect to the HGW 104, and the HGW 104 stops accepting the access from the FGW 105 in accordance with the request.

Further, the HGW 104 sends a request for nullifying the access authority to the FGW 105 (S1614). The FGW 105 receives the request, and then nullifies its access authority with respect to the HGW 104. The nullification of the access authority is the same as the nullification of the access authority in S612 explained in the first embodiment.
(b) of Fig. 16 is a sequence diagram illustrating a procedure for nullifying the access authority of the FGW 105 in such a manner that the mobile terminal 107 directly accesses the HGW 104 via the Internet, the mobile network, or the like. First, in the FNW 102 in the second place, the FGW 105 obtains the access authority with respect to the HNW 101 by use of the authentication information obtained via the mobile terminal 107 (S1621). After that, when the user who carries the mobile terminal 107 leaves the second place, and connects the mobile terminal 107 directly to the HGW 104 (S1622), the HGW 104 nullifies the access from the FGW 105 (S1623). The nullification of the access authority in S 1623 is the same as the nullification of the access authority in S614 explained in the first embodiment.

Further, the HGW 104 sends the request for nullifying the access authority to the FGW 105 (S1624). The FGW 105 receives the request, and then nullifies its access authority with respect to the HGW 104. The nullification of the access authority is the same as the nullification of the access authority in S612 explained in the first embodiment.

With the arrangement explained in the present embodiment, even if the access authority of the FNW 102 continues to be available, it is possible to nullify the access authority at the request for nullifying the access authority from the mobile terminal 107. That is, it becomes possible to prevent access from outside the user's home anytime and anywhere by accessing the HGW 104 provided in the user's home from the mobile terminal 107.

It should be noted that it is possible to combine the nullification procedures explained in the first and second embodiments. In this case, priorities should be set to, respectively, the nullification procedures. For example, in the arrangement of the system illustrated in Fig. 15, the access authority of the FGW 105 may be nullified when, in the FNW 109, the FGW 110 obtains the access authority with respect to the HGW 104 via the mobile terminal 107, even if the player 106, which belongs to the FNW 102, is accessing the media server 103 via the FGW 105. Such arrangements are not particularly limited.

In the embodiments described above, the player 106 and the mobile terminal 107 are independently provided as different devices. However, the present invention is not particularly limited to this. Such devices may be arranged integral as a single device.

Further, in the nullification procedure of the access authority in the embodiments described above, the HGW 104 sends the request for nullifying the access authority to the FGW 105 in order to demonstratively give the FGW 105 a notice that the access authority is nullified. However, it is possible for the HGW 104 not to give the FGW 105 the notice demonstratively but to give the FGW 105 the notice indirectly by rejecting the access when the FGW 105 accesses the HGW 104.

### (Other Arrangements)

The present invention can be also realized with the following arrangements.

### (First Arrangement)

A gateway device for delivering content managed by an external gateway to a content playback device managed by the gateway device, includes: external gateway designation information obtaining means for obtaining, via a mobile terminal which can communicate with the gateway device, external gateway designation information for designating the external gateway; communication pathway establishing means for establishing a communication pathway between the gateway device and the external gateway designated by the external gateway designation information; content obtaining means for obtaining, via the communication pathway established by the communication pathway establishing means, the content managed by the external gateway from the external gateway; content delivery means for delivering the content obtained by the content obtaining means to the content playback device managed by the gateway device; and communication pathway disconnection means for disconnecting the communication pathway established by the communication pathway establishing means.

### (Second Arrangement)

The gateway device according to the first arrangement, further includes authentication information obtaining means for obtaining, from the mobile terminal, authentication information issued by the external gateway, wherein the communication pathway establishing means establishes the communication pathway authenticated between the gateway device and the external gateway by use of the authentication information thus obtained.

### (Third Arrangement)

The gateway device according to the second arrangement, wherein the communication pathway disconnection means disconnects, on an instruction from the mobile terminal, the communication pathway established by use of the authentication information obtained from the mobile terminal.

### (Fourth Arrangement)

The gateway device according to the second arrangement, wherein the communication pathway disconnection means disconnects, based on communication possible period information received from the mobile terminal, the communication pathway established by use of the authentication information obtained from the mobile terminal.

### (Fifth Arrangement)

The gateway device according to the second arrangement, wherein the communication pathway disconnection means disconnects the communication pathway established by use of the authentication information obtained from the mobile terminal, in a case where the presence of the mobile terminal is not confirmed

### (Sixth Arrangement)

The gateway device according to the second arrangement, wherein the communication pathway disconnection means disconnects the communication pathway established by use of the authentication information obtained from the mobile terminal, in a case where the content playback device finishes its operation.

### (Seventh Arrangement)

The gateway device according to the second arrangement, wherein the communication pathway disconnection means disconnects the communication pathway established by use of the authentication information obtained from the mobile terminal, in accordance with a condition of access from the content playback device to the external gateway.

### (Eighth Arrangement)

The gateway device according to the seventh arrangement, wherein, when the content playback device obtains a list of the content managed by the external gateway, the communication pathway disconnection means sets an available period so that the communication pathway established by use of the authentication information obtained from the mobile terminal is disconnected when the available period passed.

### (Ninth Arrangement)

The gateway device according to the seventh arrangement, wherein, when the content playback device stops playing back the content managed by the external gateway in the middle of the content, the communication pathway disconnection means sets an available period so that the communication pathway established by use of the authentication information obtained from the mobile terminal is disconnected when the available period elapses.

### (Tenth Arrangement)

The gateway device according to the seventh arrangement, wherein, when the content playback device finishes playing back the content managed by the external gateway to the end of the content, the communication pathway disconnection means sets an available period so that the communication pathway established by use of the authentication information obtained from the mobile terminal is disconnected when the available period elapses.

### (Eleventh Arrangement)

The gateway device according to the seventh arrangement, wherein, when the content playback device finishes accessing all of the content managed by the external gateway, the communication pathway disconnection means sets an available period so that the communication pathway established by use of the authentication information obtained from the mobile terminal is disconnected when the available period elapses.

### (Twelfth Arrangement)

The gateway device according to the second arrangement, wherein the communication pathway disconnection means disconnects the communication pathway established by use of the authentication information obtained from the mobile terminal, in a case where another communication pathway is established between a gateway different from said gateway device and the external gateway by use of the mobile terminal.

### (Thirteenth Arrangement)

The gateway device according to the second arrangement, wherein the communication pathway disconnection means disconnects the communication pathway established by use of the authentication information obtained from the mobile terminal, in a case where another communication pathway is established between the mobile terminal and the external gateway.

### (Fourteenth Arrangement)

A content playback device includes: content obtaining means for receiving content delivered by the content delivery means; and content playback means for playing back the content thus received.

### (Fifteenth Arrangement)

An external gateway device for sending content managed by the external gateway device to a gateway device which can communicate with the external gateway device, includes: authentication information sending means for sending authentication information to a mobile terminal; communication pathway establishing means for establishing a communication pathway between the external gateway device and a gateway device according to any of the first arrangement through the thirteenth arrangement; content delivery means for delivering the content managed by the external gateway device to the gateway device according to any of the first arrangement through the thirteenth arrangement via the communication pathway established by the communication pathway establishing means; and communication pathway disconnection means for disconnecting the communication pathway established by the communication pathway establishing means.

### (Sixteenth Arrangement)

A mobile terminal for establishing a communication pathway between an external gateway which is associated with the mobile terminal in advance, and a gateway device which can communicate with the mobile terminal, includes: authentication information sending means for sending authentication information to authentication information obtaining means of a gateway device according to any of the first arrangement through the thirteenth arrangement; and authentication information obtaining means for obtaining authentication information sent by authentication information sending means of the external gateway device.

### (Seventeenth Arrangement)

A network system in which devices connected via a network share each content, includes: a content playback device according to the fourteenth arrangement; and the mobile terminal according to the sixteenth arrangement, both of which are managed by a gateway device according to any of the first arrangement through the thirteenth arrangement.

Ultimately, each block included in the foreign gateway (FGW) 105 can be constituted by hardware logic, or alternatively can be realized by software by use of a CPU.

That is, the foreign gateway 105 includes: a CPU (central processing unit) for carrying out instructions of an image display program which realizes each function; an ROM (read only memory) in which the program is stored; an RAM (random access memory) for carrying out the program; a storage device (recording medium), such as a memory, for storing the program and various data; and the like. Further, the object of the present invention can be achieved such that (i) the foreign gateway 105 is provided with a computer-readable storage medium in which a program code (executable program, intermediate code program, source program) of an image display program of the foreign gateway 105 is stored, which program code is software for realizing the functions described above, and (ii) the computer (alternatively, CPU or MPU) reads and executes the program code stored in the computer-readable storage medium.

Examples of the storage medium encompass: a tape (a magnetic tape or a cassette tape, for example); a disc, such as a magnetic disk (a floppy® disk, or a hard disk, for example) and an optical disk (a CD-ROM, an MO, an MD, a DVD, or a CD-R, for example); a card (an IC card (including a memory card) and an optical card, for example); and a semiconductor memory (a mask ROM, an EPROM, an EEPROM, or a flash ROM, for example).

Further, it is possible to arrange the foreign gateway 105 so that the foreign gateway can communicate with a communication network, and is provided with the program code via the communication network. The communication network may be, but not particularly limited to, the Internet, an intranet, an extranet, a LAN, an ISDN, a VAN, a CATV communication network, a virtual private network, a telephone line network, a mobile communication network, or a satellite communication network. Furthermore, a transmission medium constituting the communication network may be, but not particularly limited to, (i) a wired transmission medium, such an IEEE1394, a USB, a power-line carrier, a cable TV line, a telephone line, or an ADSL line, or (ii) a wireless transmission medium, such as infrared radiation (IrDA, or remote control, for example), Bluetooth®, 802.11 radio transmission, an HDR, a mobile phone network, a satellite line, or a digital terrestrial network. Further, the present invention can be also realized by the program codes in the form of a computer data signal embedded in a carrier wave, which is the program that is electrically transmitted.

Furthermore, each block included in the mobile terminal 107 can be realized by hardware logic, or alternatively can be realized by software by use of the CPU, as in the above description regarding the foreign gateway 105. Moreover, each block included in the home gateway (HGW) 104 can be realized by hardware logic, or alternatively can be realized by software by use of the CPU, as in the above description regarding the foreign gateway 105.

The present invention is not limited to the description of the embodiments above, but may be altered by a skilled person within the scope of the claims. An embodiment based on a proper combination of technical means disclosed in different embodiments is encompassed in the technical scope of the present invention.

A content delivery server of the present invention, for delivering content, managed by a content providing server outside a network to which the content delivery server belongs, to a content playback device which is managed by the content delivery server and plays back the content, including: authentication information obtaining means for obtaining, via a terminal device carried by a user, authentication information which is necessary for the content delivery server to access the content providing server so as to obtain the content; access authority obtaining means for obtaining an access authority to access the content providing server from the content providing server, based on the authentication information; and access authority nullification means for nullifying the access authority in a case where, after the access authority is obtained, a communication is interrupted between the content delivery server and the terminal device.

Further, a content delivery server of the present invention includes access authority nullification means for nullifying the access authority in a case where, after the access authority is obtained, an elapsed period since the access authority was obtained exceeds an available period which is set by the user with respect to the access authority.

Furthermore, a content delivery server of the present invention includes: playback function termination detecting means for detecting a termination of a playback function of the content playback device; and access authority nullification means for nullifying the access authority in a case where, after the access authority is obtained, the playback function termination detecting means detects a termination of the playback function.

Moreover, a content delivery server of the present invention includes: playback condition detecting means for detecting a playback condition of content of the content playback device; and access authority nullification means for nullifying the access authority in a case where, after the access authority is obtained, a period determined in accordance with the playback condition elapses.

Further, a content delivery server of the present invention includes access authority nullification means for nullifying the access authority in a case where, after the access authority is obtained, an external content delivery server, which is different from said content delivery server, obtains the access authority from the content providing server by use of the authentication information obtained via the terminal device.

A content providing server of the present invention outside a network to which the content delivery server belongs, includes content delivery server access authority nullification means for nullifying the access authority at a request of the content delivery server.

Thus, it becomes possible to nullify content delivery server's access authority with respect to the content providing server at appropriate timing, and prevent the content in the user's home from being accessed from outside in such a manner that the user does not intend that the content is accessed.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention is suitable for a content delivery server for delivering content managed by a content providing server to a content playback device managed by the content delivery server. The present invention is particularly suitable for a gateway device which limits access to the content providing server at appropriate timing after a user finishes viewing and listening to the content.

## Claims

1. A content delivery server for delivering content, managed by a content providing server outside a local network to which the content delivery server belongs, to a content playback device which is in the local network and plays back the content, comprising:
authentication information obtaining means for obtaining, via a terminal device carried by a user, authentication information which is necessary for the content delivery server to access the content providing server so as to obtain the content;
access authority obtaining means for obtaining an access authority to access the content providing server from the content providing server, based on the authentication information; and
access authority nullifying means for nullifying the access authority in a case where, after the access authority is obtained, a communication is interrupted between the content delivery server and the terminal device.

2. A content delivery server for delivering content, managed by a content providing server outside a local network to which the content delivery server belongs, to a content playback device which is in the local network and plays back the content, comprising:
authentication information obtaining means for obtaining, via a terminal device carried by a user, authentication information which is necessary for the content delivery server to access the content providing server so as to obtain the content;
access authority obtaining means for obtaining an access authority to access the content providing server from the content providing server, based on the authentication information; and
access authority nullifying means for nullifying the access authority in a case where, after the access authority is obtained, an elapsed period since the access authority was obtained exceeds an available period which is set by the user with respect to the access authority.

3. A content delivery server for delivering content, managed by a content providing server outside a local network to which the content delivery server belongs, to a content playback device which is in the local network and plays back the content, comprising:
authentication information obtaining means for obtaining, via a terminal device carried by a user, authentication information which is necessary for the content delivery server to access the content providing server so as to obtain the content;
access authority obtaining means for obtaining an access authority to access the content providing server from the content providing server, based on the authentication information;
playback function termination detecting means for detecting a termination of a playback function of the content playback device; and
access authority nullifying means for nullifying the access authority in a case where, after the access authority is obtained, the playback function termination detecting means detects a termination of the playback function.

4. A content delivery server for delivering content, managed by a content providing server outside a local network to which the content delivery server belongs, to a content playback device which is in the local network and plays back the content, comprising:
authentication information obtaining means for obtaining, via a terminal device carried by a user, authentication information which is necessary for the content delivery server to access the content providing server so as to obtain the content;
access authority obtaining means for obtaining an access authority to access the content providing server from the content providing server, based on the authentication information;
playback condition detecting means for detecting a playback condition of the content of the content playback device; and
access authority nullifying means for nullifying the access authority in a case where, after the access authority is obtained, a period that is determined in accordance with the playback condition elapses.

5. A content delivery server for delivering content, managed by a content providing server outside a local network to which the content delivery server belongs, to a content playback device which is in the local network and plays back the content, comprising:
authentication information obtaining means for obtaining, via a terminal device carried by a user, authentication information which is necessary for the content delivery server to access the content providing server so as to obtain the content;
access authority obtaining means for obtaining an access authority to access the content providing server from the content providing server, based on the authentication information; and
access authority nullifying means for nullifying the access authority in a case where, after the access authority is obtained, an external content delivery server that is different from said content delivery server obtains the access authority by use of the authentication information obtained via the terminal device.

6. A content delivery server for delivering content, managed by a content providing server outside a local network to which the content delivery server belongs, to a content playback device which is in the local network and plays back the content, comprising:
authentication information obtaining means for obtaining, via a terminal device carried by a user, authentication information which is necessary for the content delivery server to access the content providing server so as to obtain the content;
access authority obtaining means for obtaining an access authority to access the content providing server from the content providing server, based on the authentication information;
power-off detecting means for detecting power-off of the content playback device; and
access authority nullifying means for nullifying the access authority in a case where, after the access authority is obtained, power-off of the content playback device is detected.

7. The content delivery server according to claim 4, wherein:
the playback condition detecting means detects, as the playback condition, a fact that the content playback device has obtained a list of content.

8. The content delivery server according to claim 4, wherein:
the playback condition detecting means detects, as the playback condition, a fact that the content playback device temporarily has suspended a playback of the content during the playback of the content.

9. The content delivery server according to claim 4, wherein:
the playback condition detecting means detects, as the playback condition, a fact that the content playback device has finished playing back the content to the end of the content.

10. The content delivery server according to claim 4, wherein:
the playback condition detecting means detects, as the playback condition, a fact that the content playback device has finished playing back all of the content managed by the content providing server.

11. A content providing server outside a network to which a content delivery server according to any of claims 1 through 10 belongs, comprising:
content delivery server access authority nullifying means for nullifying the access authority at a request of the content delivery server.

12. The content providing server according to claim 11, wherein:
the content delivery server access authority nullifying means nullifies the access authority at a request of the terminal device.

13. A terminal device comprising:
content providing server authentication information obtaining means for obtaining the authentication information from a content providing server according to claim 11 or 12; and
content providing server authentication information providing means for providing the authentication information obtained by the content providing server authentication information obtaining means to the content delivery server.

14. A content delivery system comprising:
a content delivery server according to any of claims 1 through 10;
a content providing server according to claim 11 or 12;
a terminal device according to claim 13; and
a content playback device which belongs to the local network to which the content delivery server belongs, and plays back the content delivered by the content delivery server,
the content providing server nullifying the access authority of the content delivery server or the access authority of the external content delivery server at the request of the content delivery server.

15. The content delivery server according to any of claims 1 through 10, further comprising:
a content playback device for playing back the content.

16. A content delivery method for delivering content, managed by a content providing server outside a local network to which a content delivery server belongs, to a content playback device which is in the local network and plays back the content, comprising the steps of:
obtaining, via a terminal device carried by a user, authentication information which is necessary for the content delivery server to access the content providing server so as to obtain the content;
obtaining an access authority to access the content providing server from the content providing server, based on the authentication information; and
nullifying the access authority in a case where, after the access authority is obtained, a communication is interrupted between the content delivery server and the terminal device.

17. A content delivery method for delivering content, managed by a content providing server outside a local network to which a content delivery server belongs, to a content playback device which is in the local network and plays back the content, comprising the steps of:
obtaining, via a terminal device carried by a user, authentication information which is necessary for the content delivery server to access the content providing server so as to obtain the content;
obtaining an access authority to access the content providing server from the content providing server, based on the authentication information; and
nullifying the access authority in a case where, after the access authority is obtained, an elapsed period since the access authority was obtained exceeds an available period, which is set by the user with respect to the access authority.

18. A content delivery method for delivering content, managed by a content providing server outside a local network to which a content delivery server belongs, to a content playback device which is in the local network and plays back the content, comprising the steps of:
obtaining, via a terminal device carried by a user, authentication information which is necessary for the content delivery server to access the content providing server so as to obtain the content;
obtaining an access authority for accessing the content providing server from the content providing server, based on the authentication information;
detecting a termination of a playback function of the content playback device; and
nullifying the access authority in a case where, after the access authority is obtained, a termination of the playback function is detected in said step of detecting a termination.

19. A content delivery method for delivering content, managed by a content providing server outside a local network to which a content delivery server belongs, to a content playback device which is in the local network and plays back the content, comprising the steps of:
obtaining, via a terminal device carried by a user, authentication information which is necessary for the content delivery server to access the content providing server so as to obtain the content;
obtaining an access authority to access the content providing server from the content providing server, based on the authentication information;
detecting a playback condition of the content of the content playback device; and
nullifying the access authority in a case where, after the access authority is obtained, a period that is determined in accordance with the playback condition elapses.

20. A content delivery method for delivering content, managed by a content providing server outside a local network to which a content delivery server belongs, to a content playback device which is in the local network and plays back the content, comprising the steps of:
obtaining, via a terminal device carried by a user, authentication information which is necessary for the content delivery server to access the content providing server so as to obtain the content;
obtaining an access authority to access the content providing server from the content providing server, based on the authentication information; and
nullifying the access authority in a case where, after the access authority is obtained, an external content delivery server that is different from said content delivery server obtains the access authority from the content providing server by use of the authentication information obtained via the terminal device.

21. A content delivery method for delivering content, managed by a content providing server outside a local network to which a content delivery server belongs, to a content playback device which is in the local network and plays back the content, comprising the steps of:
obtaining, via a terminal device carried by a user, authentication information which is necessary for the content delivery server to access the content providing server so as to obtain the content;
obtaining an access authority to access the content providing server from the content providing server, based on the authentication information;
detecting power-off of the content playback device; and
nullifying the access authority in a case where, after the access authority is obtained, power-off of the content playback device is detected.

22. A content providing method comprising the step of:
nullifying the access authority at a request of a content delivery server according to any of claims 1 through 10.

23. A control program for causing a content delivery server according to any of claims 1 through 10 to operate, said program causing a computer to function as each of said means.

24. A control program for causing a content providing server according to claim 11 or 12 to operate, said program causing a computer to function as each of said means.

25. A computer-readable storage medium in which a control program according to claim 23 or 24 is stored.
